(19) Europäisches Patentamt
European Patent Office
Office européen des brevets

(11) **EP 2 600 611 A1**

(12) **EUROPÄISCHE PATENTANMELDUNG**

(43) Veröffentlichungstag:
**05.06.2013 Patentblatt 2013/23**

(51) Int Cl.:
*H04N 7/18* (2006.01)     *G06K 9/00* (2006.01)
*G08B 13/196* (2006.01)    *G06K 9/62* (2006.01)
*G06K 9/32* (2006.01)

(21) Anmeldenummer: **11405363.0**

(22) Anmeldetag: **29.11.2011**

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**

(71) Anmelder: **Xovis AG**
**3014 Bern (DE)**

(72) Erfinder: **Die Erfindernennung liegt noch nicht vor**

(74) Vertreter: **Rüfenacht, Philipp Michael et al
Keller & Partner
Patentanwälte AG
Schmiedenplatz 5
Postfach
3000 Bern 7 (CH)**

(54) **Verfahren und Vorrichtung zur überwachung eines Überwachungsbereichs**

(57) Die Erfindung betrifft ein Verfahren sowie eine Vorrichtung (1) zur Überwachung eines Überwachungsbereichs (2) mit wenigstens zwei Bildsensoren (3, 4). Durch jeden der Bildsensoren (3, 4) wird ein Teilbereich (5, 6) des Überwachungsbereichs (2) überwacht, indem durch jeden Bildsensor (3, 4) innerhalb des von ihm überwachten Teilbereichs (5, 6) lokalisierte, zu überwachende Objekte (9.1, 9.2) erfasst werden und von jedem Bildsensor (3, 4) Daten zu den erfassten Objekten (9.1, 9.2) ausgegeben werden. Die Bildsensoren (3, 4) sind derart angeordnet und ausgerichtet, dass sich die überwachten Teilbereiche (5, 6) überlappen und dass jedes zu überwachende Objekt (9,1m 9,2), welches sich im Überwachungsbereich (2) befindet, immer von mindestens einem Bildsensor (3, 4) erfasst ist. Aus den Daten der Bildsensoren (3, 4) wird eine Gesamtheit der zu überwachenden Objekte im Überwachungsbereich (2) ermittelt, wobei durch eine Berechnungseinheit (8) aufgrund der Daten der Bildsensoren (3, 4) die zu überwachenden Objekte (9.1, 9.2) in überlappenden Teilbereichen (5, 6), welche von mehr als einem Bildsensor (3, 4) erfasst sind, mittels Bewertung ihrer Übereinstimmung einander zuordenbar sind um die Gesamtheit der zu überwachenden Objekte im Überwachungsbereich (2) zu ermitteln. Das Verfahren sowie die Vorrichtung sind geeignet zur Personenverfolgung und zur Personenzählung und funktionieren sensorübergreifend bzw. kameraübergreifend.

Fig. 3

## Beschreibung

### Technisches Gebiet

Die Erfindung betrifft ein Verfahren sowie eine Vorrichtung zur Überwachung eines Überwachungsbereichs mit wenigstens zwei Bildsensoren. Durch jeden der Bildsensoren wird ein Teilbereich des Überwachungsbereichs überwacht, indem durch jeden Bildsensor innerhalb des von ihm überwachten Teilbereichs lokalisierte, zu überwachende Objekte erfasst werden und von jedem Bildsensor Daten zu den erfassten Objekten ausgegeben werden. Die Bildsensoren sind derart angeordnet und ausgerichtet, dass sich die überwachten Teilbereiche überlappen und dass jedes zu überwachende Objekt, welches sich im Überwachungsbereich befindet, immer von mindestens einem Bildsensor erfasst ist. Aus den Daten der Bildsensoren wird eine Gesamtheit der zu überwachenden Objekte im Überwachungsbereich ermittelt.

### Stand der Technik

Es sind verschiedene Verfahren und Vorrichtungen bekannt, welche zum oben genannten Stand der Technik gehören. Ein Beispiel dazu ist das in der WO 2005/027533 der Intellivid Corp. beschriebene computerunterstützte Videoüberwachungssystem, welches mit verschiedenen Kameras verschiedene Teilbereiche überwachen kann. Jeder dieser Teilbereiche ist in Unterbereiche unterteilt und in jedem Unterbereich werden die erfassten Objekte gezählt. Aufgrund einer Statistik über die Präsenz von Objekten in den Unterbereichen wird eine Wahrscheinlichkeit bestimmt, dass Unterbereiche, welche von verschiedenen Kameras überwacht werden, übereinstimmen. Dadurch können Objekte, welche sich in solchen Unterbereichen befinden, einander zugeordnet werden.

Ein ähnliches Vorgehen wird in der EP 1 676 239 B1 der Sensormatic Electronics beschrieben. Auch hier werden mit verschiedenen Kameras verschiedene Teilbereiche überwacht, wobei jeder Teilbereich in Unterbereiche unterteilt ist und in jedem Unterbereich die erfassten Objekte gezählt werden. Es wird berücksichtigt, dass sich Objekte in überlappenden Gesichtsfeldern von mehreren Kameras befinden können. Dazu verfügt ein zentraler Rechner über Informationen über die überlappenden Unterbereiche, welche anhand von Korrelationen zwischen Bildern der Kameras gewonnen werden oder welche explizit vorgegeben werden. Objekte, die sich in solchen Unterbereichen befinden, werden einander zugeordnet. Um diese Zuordnung zu verbessern, können Merkmale der Objekte wie beispielsweise ihre Farbe verwendet werden.

Der Nachteil der in der WO 2005/027533 der Intellivid Corp. und in der EP 1 676 239 B1 der Sensormatic Electronics beschriebenen Systeme ist, dass die Zuordnung der Objekte in erster Linie über eine Zuordnung der überlappenden Unterbereiche erfolgt. Dies führt einerseits dazu, dass zu gross gewählte Unterbereiche zu Ungenauigkeiten führen, weil sich in einem solchen Unterbereich mehrere Objekte befinden können. Andererseits führt dies dazu, dass innerhalb eines von einer Kamera überwachten Teilbereichs beim Übergang eines Objekts von einem Unterbereich in einen anderen Unterbereich Fehlzuordnungen geschehen können.

Ein etwas anderer Ansatz wird in der US 7,149,325 B2 von Honeywell beschrieben. Hier werden die Gesichtsfelder von mehreren Kameras zu einem gemeinsamen, übergeordneten Bild zusammengesetzt. Zu diesem Zweck werden Homografiematrizen gebildet, indem ausgezeichnete Punkte in den überlappenden Bereichen in Übereinstimmung gebracht werden. Dabei werden die von den Kameras aufgenommenen Bilder für die Kombination zum übergeordneten Bild entzerrt. Vordergrundobjekte, wie z. B. sich bewegende Personen, werden als Pixelansammlungen modelliert und in ihrer Bewegung verfolgt. Ein wichtiges Merkmal, welches zur Identifikation von Personen herangezogen wird, ist eine Farbsignatur.

Der Nachteil dieses Ansatzes ist, dass in einem ersten Schritt die Bilder der Kameras zusammengesetzt werden müssen. Wenn dabei die Kameras Videokameras sind, müssen die Bildsequenzen der verschiedenen Kameras synchronisiert werden, um die entsprechenden Sequenzen der übergeordneten Bilder zusammensetzen zu können. Dies führt zu einer Verteuerung der Installation der Kameras.

Anstelle der in der US 7,149,325 B2 von Honeywell beschriebenen Modellierung der Personen als Pixelansammlungen können auch andere Modellierungsarten zur Anwendung gelangen. Ein solches Beispiel ist in der US 2008/118106 A1 von Kilambi et al. beschrieben. Hier werden Gruppen von Personen als elliptische Zylinder modelliert. Diese Zylinder werden für nachfolgende Berechnungen, insbesondere für die Bestimmung der Anzahl Personen in der Gruppe, herangezogen.

Eine weitere Möglichkeit für die Modellierung von Personen ist in der US 7,529,388 B2 von Brown et al. beschrieben. Hier werden die einzelnen Personen als Ellipsen modelliert.

### Darstellung der Erfindung

Aufgabe der Erfindung ist es, ein dem eingangs genannten technischen Gebiet zugehörendes Verfahren und eine entsprechende Vorrichtung zu schaffen, welche aus den Daten der Bildsensoren eine verbesserte Ermittlung der Gesamtheit der zu überwachenden Objekte im Überwachungsbereich ermöglichen.

Die Lösung der Aufgabe ist durch die Merkmale des Anspruchs 1 definiert. Gemäss dem erfindungsgemässen Verfahren werden aufgrund der Daten der Bildsensoren die zu überwachenden Objekte in überlappenden Teilbereichen, welche von mehr als einem Bildsensor erfasst sind, mittels einer Bewertung ihrer Übereinstimmung einander zugeordnet um die Gesamtheit der zu überwachenden Objekte im Überwachungsbereich zu ermitteln. Gemäss der erfindungsgemässen Vorrichtung sind durch eine Berechnungseinheit aufgrund der Daten der Bildsensoren die zu überwachenden Objekte in überlappenden Teilbereichen, welche von mehr als einem Bildsensor erfasst sind, mittels Bewertung ihrer Übereinstimmung einander zuordenbar um die Gesamtheit der zu überwachenden Objekte im Überwachungsbereich zu ermitteln. Dabei kann die Berechnungseinheit als separate Einheit ausgebildet sein oder kann in einen der wenigstens zwei Bildsensoren integriert sein. Es besteht dabei aber auch die Möglichkeit, dass mehr als einer oder alle der wenigstens zwei Bildsensoren eine solche Berechnungseinheit umfassen.

Bei den hierzu verwendeten Bildsensoren kann es sich um einen beliebigen Bildsensortyp handeln. Beispielsweise kann es sich um Kameras handeln, welche nur gelegentlich ein Bild erfassen. Dabei kann die Erfassung eines Bildes jeweils durch einen Bewegungssensor ausgelöst werden. Es besteht aber auch die Möglichkeit, dass die Bildsensoren in regelmässigen Abständen Bilder erfassen. Zwischen den einzelnen Bildern können zeitliche Abstände einer beliebigen Länge bestehen. Diese Abstände können aber auch beliebig kurz sein. In letzterem Fall kann es sich bei den Bildsensoren beispielsweise um Kameras handeln, welche Filmsequenzen aufnehmen. Unabhängig davon, ob die Bildsensoren Einzelbilder oder Filmsequenzen aufnehmen, kann es sich bei den Bildsensoren um Kameras handeln, welche optische Bilder im sichtbaren Bereich aufnehmen. Es kann sich aber auch um einen beliebigen anderen Kameratyp handeln. Beispielsweise kann es sich bei den Bildsensoren auch um Infrarotkameras, Ultraviolettkameras oder um andere, an sich verfügbare Kameras handeln, welche Bilder von elektromagnetischer Strahlung einer beliebigen anderen Wellenlänge oder eines anderen beliebigen Wellenlängenbereichs aufnehmen. Weiter kann es sich bei den Bildsensoren beispielsweise auch um Kameras handeln, welche Schall- oder Ultraschallbilder aufnehmen. Es besteht aber auch die Möglichkeit, dass es sich bei den Bildsensoren um Lasersensoren handelt.

Unabhängig vom Typ der Bildsensoren besteht die Möglichkeit, dass einige oder jeder der Bildsensoren zwei Sensoren umfasst. Durch einen solchen Bildsensor kann eine Erfassung des dreidimensionalen Raums möglich sein. Beispielsweise kann es sich bei einem solchen Bildsensor um einen Bildsensor mit zwei nebeneinander angeordneten Kameras handeln. Durch das von den beiden Kameras erfasste Stereobild kann beispielsweise nicht nur eine Position eines Objekts in einer Bildebene erfasst werden, sondern es kann auch eine Position eines Objekts in einer Tiefe senkrecht zur Bildebene bestimmt werden. Die Erfindung lässt sich aber ausdrücklich auch ohne jegliche Erfassung von Stereobildern realisieren. Es besteht aber auch die Möglichkeit, dass es sich bei den Bildsensoren um Sensoren handelt, welche eine Erfassung des dreidimensionalen Raums ermöglichen. Beispielsweise kann es sich um 3D-Lasersensoren handeln, welche den Raum abscannen und dabei auch eine Distanz der zu überwachenden Objekte zum jeweiligen 3D-Lasersensor erfassen können.

Genauso wie unterschiedliche Bildsensoren verwendet werden können, können auch unterschiedliche Objekte überwacht werden. Beispielsweise kann es sich bei den zu überwachenden Objekten um Personen handeln. Dabei kann beispielsweise zwischen erwachsenen Personen und Kindern unterschieden werden. Weiter kann es sich aber bei den zu überwachenden Objekten beispielsweise auch um Tiere handeln. Dabei kann ebenfalls zwischen verschiedenen Tiergrössen unterschieden werden. Es besteht aber auch die Möglichkeit, dass die zu überwachenden Objekte Fahrzeuge oder sonstige bewegliche Gegenstände sind. Dabei kann beispielsweise zwischen Lastwagen, Autos und Motorrädern unterschieden werden. Je nach Anwendungsort und zu überwachenden Objekten können verschiedene Bildsensoren verwendet werden, welche für die entsprechende Anwendung optimiert sind. Dabei können für eine Wahl der Bildsensoren beispielsweise auch die Lichtverhältnisse berücksichtigt werden.

Die aus den Daten der Bildsensoren ermittelte Gesamtheit der zu überwachenden Objekte bezieht sich auf die zu überwachenden Objekte, welche sich im gesamten Überwachungsbereich befinden. Dabei kann diese Gesamtheit der zu überwachenden Objekte einzig eine Zahl der insgesamt erfassten Objekte oder aber eine Identifikation für jedes zu überwachende Objekt umfassen. Es besteht aber auch die Möglichkeit, dass die Gesamtheit der zu überwachenden Objekte zu jedem der Objekte weitere Daten umfasst. Beispielsweise können die weiteren Daten die Positionen der Objekte umfassen. Beispielsweise können Sie aber auch die Geschwindigkeiten der Objekte umfassen. Weiter besteht auch die Möglichkeit, dass die weiteren Daten einen Bewegungsverlauf der Objekte erfassen. Falls die Gesamtheit der zu überwachenden Objekte nebst der Identifikation weitere Daten umfasst, so können diese weiteren Daten beispielsweise eine Liste aufgeführt sein. Dabei können die einzelnen Objekte aufgrund Ihrer Position in der Liste identifiziert werden, wodurch sich eine separate Identifikation der Objekte erübrigt. Die für die Zuordnung der zu überwachenden Objekte in überlappenden Teilbereichen verwendete Bewertung der Übereinstimmung kann auf unterschiedliche Art und Weise erfolgen. Beispielsweise kann es sich um eine positive Bewertung handeln. Dabei wird die Übereinstimmung von Objekten, welche wahrscheinlicher ist, mit grösseren Werten bewertet, während die Übereinstimmung von Objekten, welche weniger wahrscheinlich ist, mit kleineren Werten bewertet wird. Es besteht dabei auch die Möglichkeit, dass die einzelnen Bewertungen zu Wahrscheinlichkeiten normiert werden. Als Variante dazu kann es sich bei der Bewertung der Übereinstimmung aber auch um eine negative Bewertung (Kostenbewertung) handeln, bei welcher die Übereinstimmung von Objekten, welche wahrscheinlicher ist, mit kleineren Werten bewertet wird, während die Übereinstimmung von Objekten, welche weniger wahrscheinlich ist, mit grösseren Werten bewertet werden. Als weitere Variante besteht aber auch die Möglichkeit, dass ein bestimmter Bewertungswert eine höchste Wahrscheinlichkeit einer Übereinstimmung darstellt. Dabei können sowohl darüberliegende als auch darunter liegende Bewertungswerte eine kleinere Wahrscheinlichkeit einer Übereinstimmung darstellen. Darüberliegende und darunterliegende Bewertungswerte können dadurch beispielsweise eine Aussage über eine verwendete Bewertungsart oder über verwendete Bewertungskriterien darstellen.

Die Lösung der Erfindung hat den Vorteil, dass durch die Bewertung der Übereinstimmung die Zuverlässigkeit der Zuordnung der Objekte erhöht ist. Entsprechend ist eine verbesserte Überwachung des Überwachungsbereichs gewährleistet. Zudem sind das Verfahren und die Vorrichtung geeignet zur Personenverfolgung und zur Personenzählung und funktionieren sensorübergreifend bzw. kameraübergreifend.

Vorzugsweise ist jedes zu überwachende Objekt, welches sich im Überwachungsbereich befindet, immer vollständig von mindestens einem Bildsensor erfasst. Dies hat den Vorteil, dass die Zuverlässigkeit der Zuordnung erhöht ist, weil die Zuordnung der von verschiedenen Bildsensoren erfassten Objekte nur für vollständig erfasste Objekte erfolgt. Als Alternative dazu besteht aber auch die Möglichkeit, dass die zu überwachenden Objekte nicht immer vollständig von mindestens einem Bildsensor erfasst sind. Dies kann vorteilhaft sein, um auch Randbereiche des Überwachungsbereichs zu erfassen und um eine Anzahl der benötigten Bildsensoren zu reduzieren.

Bevorzugt wird jeweils für die Zuordnung der zu überwachenden Objekte in überlappenden Teilbereichen eine Matrix erstellt, deren Elemente $p_{ij}$ die Bewertung enthalten, wie gut ein von einem Bildsensor erfasstes Objekt mit Identifikation i mit einem von einem anderen Bildsensor erfassten Objekt mit Identifikation j übereinstimmt. Dabei besteht die Möglichkeit, dass die Indizes i und j über alle zu überwachenden Objekte laufen, welche sich im Teilbereich befinden, der vom entsprechenden Bildsensor überwacht wird. Es besteht aber auch die Möglichkeit, dass die Indizes i und j nur über diejenigen Objekte laufen, welche sich in einem Überlappungsbereich der beiden Teilbereiche befinden und vom entsprechenden Bildsensor erfasst sind.

Falls sich drei oder mehr Teilbereiche, welche von einer entsprechenden Anzahl Bildsensoren überwacht werden, gegenseitig überlappen, so besteht die Möglichkeit, dass in einem ersten Schritt eine Zuordnung der zu überwachenden Objekten in zwei der Teilbereichen vorgenommen wird. In einem weiteren Schritt kann dann eine Zuordnung der zu überwachenden Objekte in den bereits bearbeiteten Teilbereichen und der zu überwachenden Objekte in einem weiteren Teilbereich vorgenommen werden. Dieser weitere Schritt kann wiederholt werden, bis alle überlappenden Teilbereiche bearbeitet sind.

Im Fall von drei oder mehr sich überlappenden Teilbereichen kann in einer Variante die erstellte Matrix aber auch mehr als zweidimensional sein. Beispielsweise kann die Matrix dieselbe Anzahl Dimensionen wie die Anzahl sich überlappender Teilbereiche umfassen. Entsprechend ist die Anzahl der Indizes der Matrixelemente $p_{ij}$ anzupassen. Dabei können die Indizes wiederum über alle zu überwachenden Objekte im entsprechenden Teilbereich laufen oder aber nur über diejenigen Objekte laufen, welche sich innerhalb eines Überlappungsbereichs der Teilbereiche befinden.

Es ist möglich, nur Bewertungen für Übereinstimmungen zu bestimmen, bei welchen mindestens eine gewisse Wahrscheinlichkeit einer Übereinstimmung besteht. Für die nicht bewerteten Übereinstimmungen stehen also keine Elemente. Entsprechend kann dadurch Speicherplatz und Berechnungszeit eingespart werden.

Vorzugsweise wird für jede Kombination von möglicherweise übereinstimmenden Objekten eine Summe der Bewertungen der bei dieser Kombination übereinstimmenden Objekte gebildet. Bevorzugt erfolgt dabei die Zuordnung der zu überwachenden Objekte durch eine Wahl der Kombination, welche ein Extrem dieser Summe ergibt. Dabei besteht die Möglichkeit, dass die Summe der Bewertungen maximiert wird. Dies ist dann vorteilhaft, wenn ein grosser Bewertungswert eine grosse Wahrscheinlichkeit einer Übereinstimmung darstellt, während ein kleiner Bewertungswert eine kleine Wahrscheinlichkeit einer Übereinstimmung darstellt. Die Summe kann aber auch minimiert werden. Dies ist dann vorteilhaft, wenn ein kleiner Bewertungswert eine grosse Wahrscheinlichkeit einer Übereinstimmung darstellt, während ein grosser Bewertungswert eine kleine Wahrscheinlichkeit einer Übereinstimmung darstellt. Sowohl eine Maximierung der Summe als auch eine Minimierung der Summe haben den Vorteil, dass auf einfache Art und Weise eine optimale Zuordnung der zu überwachenden Objekte erreicht werden kann.

Falls ein bestimmter Bewertungswert eine höchste Wahrscheinlichkeit einer Übereinstimmung darstellt und sowohl darüberliegende als auch darunter liegende Bewertungswerte eine kleinere Wahrscheinlichkeit einer Übereinstimmung darstellen, so kann als Variante beispielsweise eine Summe der Differenzen zwischen dem Bewertungswert mit der höchsten Wahrscheinlichkeit und den Bewertungswerten der bei dieser Kombination übereinstimmenden Objekte gebildet werden. Dabei kann die Zuordnung der zu überwachenden Objekte durch eine Wahl der Kombination mit einem Extrem dieser Summe der Differenzen erreicht werden.

Als Variante zu diesen Ausführungsformen, welche die Bildung einer Summe vorsehen, kann beispielsweise auch eine Summe von Funktionswerten der Bewertungswerte bzw. der

Differenzen gebildet werden. Als Funktion können beispielsweise die Bewertungswerte bzw. die Differenzen vor der Summierung quadriert werden oder es kann jeweils die Quadratwurzel von den Bewertungswerten bzw. Differenzen gezogen werden. Es besteht aber auch die Möglichkeit, dass die Summanden aus den Bewertungswerten bzw. Differenzen mittels einer beliebigen anderen Formel oder Funktion berechnet werden. Je nach konkreter Ausführungsform kann die Verwendung einer solchen Formel oder Funktion vorteilhaft sein, da dadurch ein stabilerer und zuverlässigerer Algorithmus für die Zuordnung der zu überwachenden Objekte erreicht werden kann.

Alternativ zu diesen Varianten kann die Zuordnung der zu überwachenden Objekte aber auch anders als durch die Bildung einer Summe der Bewertungswerte erfolgen.

Vorteilhafterweise wird bei der Bewertung der Übereinstimmung von zu überwachenden Objekten mitberücksichtigt, dass die zu überwachenden Objekte auch nur von einem Bildsensor erfasst sein können. Dass ein zu überwachendes Objekt nur von einem Bildsensor erfasst sein kann, kann beispielsweise dadurch begründet sein, dass sich ein zu überwachendes Objekt an einer nur von einem Bildsensor überwachten Position befindet. Es kann aber auch dadurch begründet sein, dass sich ein zu überwachendes Objekt zwar in einem Überlappungsbereich von zwei oder mehr Teilbereichen befindet, aber nur von einem Bildsensor erfasst ist. In beiden Fällen hat eine Mitberücksichtigung, dass die zu überwachenden Objekte auch nur von einem Bildsensor erfasst sein können, den Vorteil, dass eine verbesserte Zuordnung der zu überwachenden Objekte erreicht wird.

Falls jeweils für die Zuordnung der zu überwachenden Objekte in überlappenden Teilbereichen eine Matrix erstellt wird, kann eine solche Mitberücksichtigung beispielsweise dadurch umgesetzt sein, dass in der Matrix eine Spalte oder eine Reihe hinzugefügt wird, deren Elemente die Bewertung enthalten, dass keine Übereinstimmung mit einem zu überwachenden Objekt im Teilbereich besteht, welcher durch die Spalten bzw. Reihen repräsentiert wird.

Als Variante dazu besteht auch die Möglichkeit, dass für die Bewertung der Übereinstimmungen der zu überwachenden Objekte vorausgesetzt wird, dass jedes Objekt von wenigstens zwei Bildsensoren erfasst ist. Diese Variante kann vorteilhaft sein, wenn eine Zuordnung nur für zu überwachende Objekte erfolgt, welche sich in einem Überlappungsbereich von zwei oder mehr Teilbereichen befinden. Dadurch kann die Zuordnung rascher erfolgen.

Bevorzugt werden nicht zugeordnete Objekte als separate Objekte in die Gesamtheit der zu überwachenden Objekte aufgenommen. Dies hat den Vorteil, dass auch nicht zuordenbare oder nur mit geringer Wahrscheinlichkeit zuordenbare Objekte mit in die Gesamtheit der zu überwachenden Objekte aufgenommen werden.

Dadurch wird eine vollständigere und bessere Ermittlung der Gesamtheit der zu überwachenden Objekte ermöglicht.

Alternativ dazu besteht aber auch die Möglichkeit, dass nicht zugeordnete Objekte nicht mit in die Gesamtheit der zu überwachenden Objekte aufgenommen werden.

Vorzugsweise werden die von den Bildsensoren ausgegebenen Daten anonymisiert ausgegeben. Dadurch können die Daten zur Gesamtheit der zu überwachenden Objekte weiterverarbeitet werden, wobei Datenschutzvorschriften eingehalten werden können, ohne dass spezielle Vorkehrungen getroffen werden müssten, um die weitere Datenverarbeitung speziell zu schützen. Die Anonymisierung besteht insbesondere darin, dass die Bildsensoren keinerlei Daten ausgeben, die unmittelbar oder mittelbar einen Rückschluss auf die Identität von überwachten Personen erlauben könnten. Beispielsweise werden die erfassten Bilddaten nicht ausgegeben aber auch keine Angaben über erfasste Farben und/oder Körpermasse der überwachten Personen.

Als Alternative dazu besteht aber auch die Möglichkeit, dass die von den Bildsensoren ausgegebenen Daten nicht anonymisiert ausgegeben werden.

Bevorzugt wird in den von den Bildsensoren ausgegebenen Daten jedes erfasste Objekt durch ein parametrisiertes Modell repräsentiert. Dabei besteht die Möglichkeit, dass ein solches parametrisierte Modell einzig aus einer Position des erfassten Objekts oder aus einem Strahl, welcher ausgehend vom entsprechenden Bildsensor durch das jeweilig erfasste Objekt verläuft, besteht. Dies hat den Vorteil, dass durch die Parametrisierung der Modelle anonymisierte Daten über die zu überwachenden Objekte ausgegeben werden können. Weiter besteht aber auch die Möglichkeit, dass ein parametrisiertes Modell auch komplexer aufgebaut ist. Beispielsweise kann dadurch eine Grösse, eine Form oder eine Ausrichtung der zu überwachenden Objekte durch die Parameter charakterisiert werden. Dies hat den Vorteil, dass trotz Ausgabe solcher Parameter die Daten zu den erfassten Objekten anonymisiert werden können.

Als Variante dazu besteht aber auch die Möglichkeit, dass in den von den Bildsensoren ausgegebenen Daten die erfassten Objekte nicht durch ein parametrisiertes Modell repräsentiert werden.

Falls in den von den Bildsensoren ausgegebenen Daten jedes erfasste Objekt durch ein parametrisiertes Modell repräsentiert wird, so wird vorzugsweise für die Bewertung der Übereinstimmung jeweils ein aus einer minimalen Distanz zwischen einem Strahl ausgehend von einem Bildsensor durch einen Schwerpunkt des parametrisierten Modells und einem Strahl ausgehend von einem anderen Bildsensor durch einen Schwerpunkt des parametrisierten Modells berechneter Wert berücksichtigt. Dabei handelt es sich beim Schwerpunkt des parametrisierten Modells um einen Referenzpunkt des jeweiligen zu überwachenden Objekts, welcher im vorliegenden Dokument auch als Schwerpunkt eines Objekts bezeichnet wird. Die Verwendung dieses Begriffs bedeutet nicht, dass es sich um den physikalischen Schwerpunkt des Objekts handelt. Der Punkt kann sich zwar an der Stelle des physikalischen Schwerpunkts eines Objekts befinden, er kann aber auch woanders im oder um das Objekt angeordnet sein. Die genaue Anordnung eines solchen Schwerpunkts kann beispielsweise aufgrund der vom entsprechenden Bildsensor ausgegebenen Parameter und dem verwendeten parametrisierten Modell bestimmbar sein. Der Schwerpunkt kann aber beispielsweise auch direkt im entsprechenden Bildsensor aufgrund des verwendeten parametrisierten Modells bestimmbar sein, wobei die Bildsensoren jeweils nur Daten zum Strahl ausgehend vom jeweiligen Bildsensor durch den Schwerpunkt des entsprechenden Objekts ausgeben. Entsprechend ist die Anordnung des Schwerpunkts im parametrisierten Modell bzw. im zu überwachenden Objekt modellabhängig. Zudem kann der Schwerpunkt auf der Basis der Parameter unterschiedlich bestimmt sein. Beispielsweise kann es sich um eine geometrische Mitte des parametrisierten Modells handeln. Es kann sich aber auch um einen anderen Punkt im oder um das parametrisierte Modell handeln. Falls es sich beim parametrisierten Modell beispielsweise um eine Ellipse handelt, so kann es sich beim Schwerpunkt beispielsweise um einen Mittelpunkt der Ellipse handeln. Wenn das zu überwachende Objekt eine Person ist, so kann es sich beispielsweise auch um die Position der Füsse oder des Kopfs der zu überwachenden Person handeln, welche aufgrund der Parameter des parametrisierten Modells bestimmt wird.

Falls in den von den Bildsensoren ausgegebenen Daten jedes erfasste Objekt durch ein parametrisiertes Modell repräsentiert wird, so wird vorzugsweise für jedes zu überwachende Objekt der Gesamtheit der zu überwachenden Objekte eine Höhe des Schwerpunkts des entsprechenden Objekts gespeichert, wobei anfangs eine sinnvolle Höhe als Wert dieser Höhe angenommen wird und der Wert dieser Höhe dynamisch angepasst wird, indem bei jeder Zuordnung von zu überwachenden Objekten, bei welcher das entsprechende zu überwachende Objekt von wenigstens zwei Bildsensoren erfasst ist, eine Höhe des Schwerpunkts dieses Objekts bestimmt wird, indem eine Höhe eines Mittelpunkts einer kürzesten Verbindungslinie zwischen einem Strahl ausgehend vom einen Bildsensor durch den Schwerpunkt des von ihm erfassten parametrisierten Modells und einem Strahl ausgehend vom anderen Bildsensor durch den Schwerpunkt des von ihm erfassten parametrisierten Modells ermittelt wird. Dabei kann der Wert der Höhe beispielsweise dynamisch jeweils an den letzten bestimmten Wert angepasst werden. Es besteht aber auch die Möglichkeit, dass der Wert der Höhe jeweils dynamisch an einen Mittelwert der bisher bestimmten Werte der Höhe angepasst wird. Beides hat den Vorteil, dass die Positionen der zu überwachenden Objekte der Gesamtheit der zu überwachenden Objekte präziser bestimmt werden können, indem jeweils ein Strahl ausgehend vom entsprechenden Bildsensor durch den Schwerpunkt des von ihm erfassten parametrisierten Modells verwendet werden kann, wobei die Position des jeweiligen Objekts dem Schnittpunkt des Strahls mit einer Höhe des Schwerpunkts des entsprechenden Objekts über dem Boden des entsprechenden Teilbereichs entspricht.

Es besteht aber auch die Möglichkeit, dass keine Höhe des Schwerpunkts der zu erfassenden Objekte bestimmt und gespeichert bzw. dynamisch angepasst wird.

Falls in den von den Bildsensoren ausgegebenen Daten jedes erfasste Objekt durch ein parametrisiertes Modell repräsentiert wird, so wird bevorzugt für die Bewertung der Übereinstimmung berücksichtigt, ob sich ein Mittelpunkt einer kürzesten Verbindungslinie zwischen dem Strahl ausgehend vom einen Bildsensor durch den Schwerpunkt des von ihm erfassten parametrisierten Modells und dem Strahl ausgehend vom anderen Bildsensor durch den Schwerpunkt des von ihm erfassten parametrisierten Modells auf einer sinnvollen Höhe für eine Höhe eines Schwerpunkts der zu überwachenden Objekte befindet. Dabei besteht die Möglichkeit, dass ein fester Bereich für eine sinnvolle Höhe vorgegeben wird. Es besteht aber auch die Möglichkeit, dass ein Bereich um einen gespeicherten und dynamisch angepassten Wert der Höhe des Schwerpunkts des entsprechenden Objekts für die Bestimmung einer sinnvollen Höhe verwendet wird. Beides hat den Vorteil, dass in der Bewertung berücksichtigt wird, wie plausibel die Übereinstimmung von zwei Objekten aufgrund der Höhe ihres Schwerpunkts ist. Die Verwendung eines festen Bereichs für eine sinnvolle Höhe hat zudem den Vorteil, dass die zu überwachenden Objekte nach der Höhe ihres Schwerpunkts selektioniert werden können.

Als Variante dazu besteht auch die Möglichkeit, dass bei der Bewertung der Übereinstimmung keine Höhe des Mittelpunkts der kürzesten Verbindungslinie zwischen dem Strahl ausgehend vom einen Bildsensor durch den Schwerpunkt des von ihm erfassten parametrisierten Modells und dem Strahl ausgehend vom anderen Bildsensor durch den Schwerpunkt des von ihm erfassten parametrisierten Modells berücksichtigt wird. Dies ist vorteilhaft, wenn keine Selektion der zu überwachenden Objekte nach der Höhe ihres Schwerpunkts stattfinden soll. Beispielsweise kann dies der Fall sein, wenn die zu überwachenden Objekte sowohl erwachsene Personen wie auch Kinder verschiedenen Alters und gegebenenfalls Tiere wie beispielsweise Hunde oder Katzen umfassen.

Falls in den von den Bildsensoren ausgegebenen Daten jedes erfasste Objekt durch ein parametrisiertes Modell repräsentiert wird, so wird vorzugsweise eine Ähnlichkeit der parametrisierten Modelle der zu überwachenden Objekte für die Bewertung der Übereinstimmung berücksichtigt. Dabei besteht die Möglichkeit, dass die Parameter, die von den verschiedenen Bildsensoren zu den modellierten Objekten ausgegeben werden, direkt verglichen werden. Es besteht aber auch die Möglichkeit, dass beispielsweise eine Lage der von den Bildsensoren ausgegebenen Modelle im Raum verglichen wird, wobei eine Ausrichtung und eine Positionierung der Bildsensoren berücksichtigt werden. Falls für die erfassten, zu überwachenden Objekte ein Wert für die Höhe ihres Schwerpunkts gespeichert und möglicherweise dynamisch angepasst wird, kann beispielsweise die Position des jeweiligen Objekts durch den Schnittpunkt des Strahls ausgehend vom entsprechenden Bildsensor durch den Schwerpunkt des Objekts mit einer Höhe des Schwerpunkts des entsprechenden Objekts über dem Boden des entsprechenden Teilbereichs bestimmt werden, wobei die derart aufgrund der von den verschiedenen Bildsensoren ausgegebenen Daten bestimmten Positionen der Objekte miteinander verglichen werden. Weiter besteht aber auch die Möglichkeit, dass beispielsweise in den Bildsensoren die erfassten Objekte mit einem dreidimensionalen Modell wie beispielsweise einem Ellipsiod, einem Zylinder oder einem rechteckigen Block modelliert werden. Dabei besteht beispielsweise die Möglichkeit, dass die von den Bildsensoren ausgegebenen Daten keine Parameter von diesem dreidimensionalen Modell enthalten, sondern dass die von den Bildsensoren ausgegebenen Daten Parameter eines zweidimensionalen Modells enthalten, welches eine Projektion des dreidimensionalen Models auf eine zweidimensionale Fläche darstellt, wobei die zweidimensionale Fläche einer Modellierung der überwachten Teilbereiche entspricht. In diesem Fall können die von den Bildsensoren ausgegebenen Daten beispielsweise Parameter zu einer Ellipse, einem Rechteck oder einer anderen geometrischen Form sein. Wenn in diesem Beispiel die Ähnlichkeit der parametrisierten Modelle der zu überwachenden Objekte für die Bewertung der Übereinstimmung berücksichtigt wird, so können beispielsweise eine Ausrichtung und eine Positionierung der Bildsensoren sowie die Tatsache berücksichtigt werden, dass es sich bei den ausgegebenen Parameter um Parameter eines Modells handelt, welches einer Projektion entspricht.

Als Alternative dazu besteht auch die Möglichkeit, dass für die Bewertung der Übereinstimmung eine Ähnlichkeit der parametrisierten Modelle der zu überwachenden Objekte nicht berücksichtigt wird.

Vorteilhafterweise werden für die Bewertung der Übereinstimmung von den Bildsensoren erfasste Geschwindigkeiten und Bewegungsrichtungen der zu überwachenden Objekte berücksichtigt. Dies hat den Vorteil, dass nicht aufgrund unterschiedlicher Bewegung offensichtlich nicht übereinstimmende Objekte aufgrund ihres Bewegungsverhaltens entsprechend bewertet und von einer Zuordnung abgehalten werden können.

Als Variante dazu besteht auch die Möglichkeit, dass für die Bewertung der Übereinstimmung nur entweder von den Bildsensoren erfasste Geschwindigkeiten oder Bewegungsrichtungen der zu überwachten Objekte berücksichtigt werden. Dies hat ebenfalls den Vorteil, dass nicht übereinstimmende Objekte aufgrund ihres Bewegungsverhaltens entsprechend bewertet und von einer Zuordnung abgehalten werden können.

Als Alternative dazu besteht aber auch die Möglichkeit, dass für die Bewertung der Übereinstimmung weder von den Bildsensoren erfasste Geschwindigkeiten noch Bewegungsrichtungen der zu überwachten Objekte berücksichtigt werden.

Bevorzugt werden für die Bewertung der Übereinstimmung früher erfolgte Zuordnungen der zu überwachenden Objekte berücksichtigt. Dies hat den Vorteil, dass über einen Zeitraum eine Konsistenz der Zuordnungen der zu überwachenden Objekte erreicht werden kann. Dies ist besonders dann vorteilhaft, wenn die Bildsensoren in kurzen zeitlichen Abständen Daten zu den erfassten Objekten liefern. Beispielsweise kann dies der Fall sein, wenn es sich bei den Bildsensoren um Kameras handelt, welche Filmsequenzen aufnehmen.

Als Alternative dazu besteht aber auch die Möglichkeit, dass keine früher erfolgten Zuordnungen der zu überwachenden Objekte für die Bewertung der Übereinstimmung berücksichtigt werden. Eine solche Alternative ist beispielsweise dann angezeigt, wenn die Bildsensoren in zeitlichen Abständen Daten zu den erfassten Objekten liefern, wobei sich jeweils in der Zwischenzeit die zu überwachenden Objekte über erhebliche Distanzen bewegt haben können.

Bevorzugt werden für die Bewertung der Übereinstimmung mehrere der oben genannten Bewertungskriterien verwendet. Dabei können die verschiedenen Bewertungskriterien unterschiedlich stark gewichtet sein. Dies hat den Vorteil, dass für verschieden Arten von zu überwachenden Objekten und verschiedene Situationen, in denen die Objekte überwacht werden sollen, eine optimale Bewertung der Übereinstimmung erreicht werden kann.

Als bevorzugte Variante dazu besteht aber auch die Möglichkeit, dass für die Bewertung der Übereinstimmung nur eines der oben genannten Bewertungskriterien verwendet wird. Je nach zu überwachenden Objekten und je nach Situationen, in denen die Objekte überwacht werden sollen, kann dadurch ebenfalls eine optimale Bewertung der Übereinstimmung erreicht werden.

Als Alternative dazu besteht aber auch die Möglichkeit, dass ein oder mehrere andere Bewertungskriterien wie beispielsweise eine Farbe der zu überwachenden Objekte oder eine andere von den Bildsensoren erfasste Identifikation der Objekte als Bewertungskriterium für die Bewertung der Übereinstimmung verwendet werden. Dabei besteht auch die Möglichkeit, dass solche andere Bewertungskriterien zusammen mit den oben genannten Bewertungskriterien zur Bewertung der Übereinstimmung verwendet werden.

Weiter besteht die Möglichkeit, dass für die Zuordnung der Objekte in verschiedenen Regionen innerhalb des Überwachungsbereichs unterschiedliche Bewertungskriterien oder verschiedene Kombinationen von Bewertungskriterien für die Bewertung der Übereinstimmung verwendet werden. Dies kann beispielsweise vorteilhaft sein, wenn die Lichtverhältnisse innerhalb des Überwachungsbereichs stark unterschiedlich sind. Dann kann es beispielsweise sinnvoll sein, in einer eher dunklen Region die Geschwindigkeit der zu überwachenden Objekte stärker als eine Grösse der Objekte zu gewichten, da eine Grössenabschätzung der Objekte aufgrund der Lichtverhältnisse ungenauer ist. Gleichzeitig kann in einer helleren Region für die Bewertung der Übereinstimmung eine Grösse der Objekte vergleichsweise stärker gewichtet sein.

Vorzugsweise wird der Überwachungsbereich als zweidimensionale Fläche mit einem zweidimensionalen Koordinatensystem modelliert, wobei jedes der zu überwachenden Objekte der Gesamtheit der zu überwachenden Objekte durch sich auf dieses Koordinatensystem beziehende Daten charakterisiert wird. Dabei können die charakterisierenden Daten beispielsweise eine Identifikation des entsprechenden Objekts enthalten. Die Daten können aber beispielsweise auch Angaben über eine Position, eine Geschwindigkeit, einen Bewegungsverlauf oder Ähnliches des entsprechenden Objekts beinhalten. Dies hat den Vorteil, dass eine örtliche Zuordnung der einzelnen Objekte ermöglicht wird.

Als Variante dazu besteht auch die Möglichkeit, dass der Überwachungsbereich als dreidimensionaler Raum mit einem dreidimensionalen Koordinatensystem modelliert wird, wobei jedes der Objekte der Gesamtheit der zu überwachenden Objekte durch sich auf dieses Koordinatensystem beziehende Daten charakterisiert wird. Dabei können die charakterisierenden Daten beispielsweise eine Identifikation des entsprechenden Objekts enthalten. Die Daten können aber beispielsweise auch Angaben über eine Position, eine Geschwindigkeit, einen Bewegungsverlauf oder Ähnliches des entsprechenden Objekts beinhalten. Diese Variante hat ebenfalls den Vorteil, dass eine örtliche Zuordnung der einzelnen Objekte ermöglicht wird.

Als weitere Variante dazu besteht auch die Möglichkeit, dass der Überwachungsbereich als eindimensionaler Raum bzw. als Linie mit einem eindimensionalen Koordinatensystem modelliert wird, wobei jedes der Objekte der Gesamtheit der zu überwachenden Objekte durch sich auf dieses Koordinatensystem beziehende Daten charakterisiert wird. Dies ist beispielsweise vorteilhaft, wenn der Überwachungsbereich eine längliche Form aufweist und sich Objekte nur entlang dieser länglichen Form bewegen können. Beispielsweise kann es sich bei einem solchen Überwachungsbereich um eine Strasse, um einen Flur, um ein Rollband oder um einen anderen, seitlich begrenzen, länglichen Raum handeln. Selbstverständlich kann aber eine Strasse, ein Flur oder ein Rollband auch als zwei- oder dreidimensionaler Raum modelliert werden. Letzteres kann vorteilhaft sein, wenn sich beispielsweise Fahrzeuge auf der Strasse oder Personen oder Tiere im Gang oder auf dem Rollband gegenseitig überholen oder kreuzen können.

Falls ein Bewegungsverlauf der Objekte aufgezeichnet werden soll, so besteht zudem die Möglichkeit, dass der Überwachungsbereich als ein-, zwei- oder dreidimensionaler Raum mit einer zusätzlichen Zeitdimension modelliert wird.

Als Alternative dazu besteht aber auch die Möglichkeit, dass der Überwachungsbereich nicht als ein-, zwei- oder dreidimensionaler Raum modelliert wird. Eine solche Alternative kann vorteilhaft sein, wenn beispielsweise einzig eine Anzahl der zu überwachenden Objekte im Überwachungsbereich ermittelt werden soll. In diesem Fall werden keine Daten zur Position der Objekte benötigt, wodurch auch weniger Berechnungskapazität benötigt wird. In diesem Fall kann beispielsweise der Überwachungsbereich aber auch nur durch eine Zeitdimension modelliert sein, um eine zeitliche Änderung der Anzahl zu überwachende Objekte im Überwachungsbereich zu ermitteln.

Vorzugsweise wird jeder von einem Bildsensor überwachte Teilbereich als zweidimensionale Fläche mit einem zweidimensionalen Koordinatensystem modelliert, wobei sich die von jedem Bildsensor ausgegebenen Daten zu den erfassten Objekten auf das Koordinatensystem des von diesem Bildsensor überwachten Teilbereichs beziehen. Dabei können die von den Bildsensoren ausgegebenen Daten beispielsweise eine Identifikation des entsprechenden Objekts enthalten. Beispielsweise können die Daten aber auch Angaben über eine Position, eine Geschwindigkeit, einen Bewegungsverlauf oder Ähnliches des entsprechenden Objekts beinhalten. Beispielsweise können die ausgegebenen Daten aber auch Angaben über eine Grösse oder andere Charakteristika des Objekts beinhalten. Dies hat den Vorteil, dass eine örtliche Zuordnung der einzelnen Objekte ermöglicht wird und dass gegebenenfalls gewisse Merkmale der zu überwachenden Objekte erfassbar sind.

Als Variante dazu besteht auch die Möglichkeit, dass jeder von einem Bildsensor überwachte Teilbereich als dreidimensionaler Raum mit einem dreidimensionalen Koordinatensystem modelliert wird, wobei sich die von jedem Bildsensor ausgegebenen Daten zu den erfassten Objekten auf das Koordinatensystem des von diesem Bildsensor überwachten Teilbereichs beziehen. Dabei können die von den Bildsensoren ausgegebenen Daten beispielsweise eine Identifikation des entsprechenden Objekts enthalten. Beispielsweise können die Daten aber auch Angaben über eine Position, eine Geschwindigkeit, einen Bewegungsverlauf oder Ähnliches des entsprechenden Objekts beinhalten. Beispielsweise können die ausgegebenen Daten aber auch Angaben über eine Grösse oder andere Charakteristika des Objekts beinhalten. Diese Variante hat ebenfalls den Vorteil, dass eine örtliche Zuordnung der einzelnen Objekte ermöglicht wird und dass gegebenenfalls gewisse Merkmale der zu überwachenden Objekte erfassbar sind.

Als weitere Variante dazu besteht auch die Möglichkeit, dass jeder von einem Bildsensor überwachte Teilbereich als eindimensionaler Raum bzw. als Linie mit einem eindimensionalen Koordinatensystem modelliert wird, wobei sich die von jedem Bildsensor ausgegebenen Daten zu den erfassten Objekten auf das Koordinatensystem des von diesem Bildsensor überwachten Teilbereichs beziehen. Dies ist beispielsweise vorteilhaft, wenn der entsprechende Teilbereich eine längliche Form aufweist und sich Objekte nur entlang dieser länglichen Form bewegen können. Beispielsweise kann es sich bei einem solchen Teilbereich um eine Strasse, um einen Flur, um ein Rollband oder um einen anderen, seitlich begrenzen, länglichen Raum handeln. Selbstverständlich kann aber eine Strasse oder ein Rollband auch als zwei- oder dreidimensionaler Raum modelliert werden. Dies kann vorteilhaft sein, wenn sich beispielsweise Fahrzeuge auf der Strasse oder Personen oder Tiere im Flur oder auf dem Rollband gegenseitig überholen oder kreuzen können.

Falls ein Bewegungsverlauf der Objekte aufgezeichnet werden soll, so besteht zudem die Möglichkeit, dass jeder von einem Bildsensor überwachte Teilbereich als ein-, zwei- oder dreidimensionaler Raum mit einer zusätzlichen Zeitdimension modelliert wird.

Als Alternative dazu besteht aber auch die Möglichkeit, dass nicht jeder von einem Bildsensor überwachte Teilbereich als ein-, zwei- oder dreidimensionaler Raum modelliert wird. Beispielsweise kann jeder von einem Bildsensor überwachte Teilbereich als andersdimensionaler Raum modelliert werden. Zudem besteht die Möglichkeit, dass einer, mehrere oder alle überwachten Teilbereiche als mehr als dreidimensionale Räume modelliert werden.

Vorteilhafterweise umfassen die von den Bildsensoren ausgegebenen Daten zu jedem der erfassten, zu überwachenden Objekte eine Identifikation und X- und Y-Koordinaten. In einer bevorzugten Variante umfassen die von den Bildsensoren ausgegebenen Daten zudem zu jedem der erfassten, zu überwachenden Objekte einen Geschwindigkeitsvektor. Alternativ dazu besteht aber auch die Möglichkeit, dass die von den Bildsensoren ausgegebenen Daten jedem der erfassten, zu überwachenden Objekte andere Daten umfassen.

Falls die von den Bildsensoren überwachten Teilbereiche als zweidimensionale Flächen mit einem zweidimensionalen Koordinatensystem modelliert werden, so werden vorteilhafterweise die von den Bildsonsoren erfassten Objekte als Ellipsoide modelliert, deren Projektion auf die zweidimensionale Fläche des entsprechenden Teilbereichs eine Ellipse ergeben, wobei die von den Bildsensoren ausgegebenen Daten zu jedem der erfassten, zu überwachenden Objekte eine Identifikation, X- und Y-Koordinaten eines Mittelpunkts der Ellipse, Grössen der Hauptachsen der Ellipse, einen Orientierungswinkel der Ellipse sowie einen Geschwindigkeitsvektor umfassen. Dies hat den Vorteil, dass die von den Bildsensoren ausgegebenen Daten ausreichend anonymisiert sind. Gleichzeitig ermöglichen die von den Bildsensoren ausgegebenen Daten aber die Unterscheidung der Objekte sowie eine Positionierung und Überwachung der Geschwindigkeit der Objekte. Weiter haben diese ausgegebenen Daten den Vorteil, dass sie eine Abschätzung einer Grösse und einer Lage der zu überwachenden Objekte im Raum erlauben.

Als Variante dazu besteht auch die Möglichkeit, dass die von den Bildsensoren erfassten Objekte anders modelliert werden. Beispielsweise können die Objekte direkt als Ellipsen modelliert werden. Es besteht aber auch die Möglichkeit, dass die Objekte nicht als Ellipsoide, sondern beispielsweise als Zylinder oder rechteckige Blöcke modelliert werden. Genauso können die Objekte aber auch direkt als Projektionen eines solchen Zylinders oder als Projektion eines solchen rechteckigen Blocks oder direkt als Rechteck modelliert werden. In dieser Variante können die von den Bildsensoren ausgegebenen Daten anstelle der Hauptachsen der Ellipsen und des Orientierungswinkels der Ellipse entsprechende Parameter der verwendeten Modellierung der Objekte enthalten. Beispielsweise kann es sich bei diesen Parametern um eine Höhe und einen Radius sowie um einen Orientierungswinkel eines Zylinders handeln. Es kann sich dabei aber beispielsweise auch um die Seitenlängen und um den Orientierungswinkel eines Rechtecks handeln.

Falls die von den Bildsensoren überwachten Teilbereiche als dreidimensionale Räume mit einem dreidimensionalen Koordinatensystem modelliert werden, so werden vorteilhafterweise die von den Bildsensoren erfassten Objekte als Ellipsoide modelliert, wobei die von den Bildsensoren ausgegebenen Daten zu jedem der erfassten, zu überwachenden Objekte eine Identifikation, X-, Y- und Z-Koordinaten eines Mittelpunkts des Ellipsoids, Grössen der Hauptachsen des Ellipsoids, zwei Orientierungswinkel des Ellipsoids sowie einen Geschwindigkeitsvektor umfassen. Dies hat ebenfalls den Vorteil, dass die von den Bildsensoren ausgegebenen Daten anonymisiert sind. Gleichzeitig ermöglichen die von den Bildsensoren ausgegebenen Daten aber eine Identifikation der Objekte sowie eine Positionierung und Überwachung der Geschwindigkeit der Objekte. Weiter haben diese ausgegebenen Daten den Vorteil, dass sie eine Abschätzung einer Grösse und einer Lage der zu überwachenden Objekte im Raum erlauben.

Als Variante dazu besteht auch die Möglichkeit, dass die von den Bildsensoren erfassten Objekte anders modelliert werden. Beispielsweise können die Objekte nicht als Ellipsoide, sondern beispielsweise als Zylinder oder rechteckige Blöcke modelliert werden. In dieser Variante können die von den Bildsensoren ausgegebenen Daten anstelle der Hauptachsen des Ellipsoids und der beiden Orientierungswinkel des Ellipsoids entsprechende Parameter der verwendeten Modellierung der Objekte enthalten. Beispielsweise kann es sich bei diesen Parametern um eine Höhe und einen Radius sowie um zwei Orientierungswinkel eines Zylinders handeln. Es kann sich dabei aber beispielsweise auch um die Seitenlängen und um zwei Orientierungswinkel eines rechteckigen Blocks handeln.

Alternativ dazu besteht auch die Möglichkeit, dass die von den Bildsensoren erfassten Objekte anders modelliert werden und dass die von den Bildsensoren ausgegebenen Daten andere Daten zu den erfassten Objekten umfassen. Beispielsweise können die Daten auch nur eine Position der erfassten Objekte umfassen. Es besteht aber auch die Möglichkeit, dass die Daten Informationen wie beispielsweise Farben oder Identifizierungscodes der erfassten Objekte umfassen.

Falls sich die von den Bildsensoren ausgegebenen Daten auf ein ein-, zwei- oder dreidimensionales Koordinatensystem beziehen, so werden die Koordinatensysteme, auf welche sich die von den Bildsensoren ausgegebenen Daten beziehen, vorteilhafterweise entzerrt. Dabei werden die Koordinatensysteme bevorzugt dadurch entzerrt, dass objektivbedingte Krümmungen der Koordinatensysteme begradigt werden. Dies kann beispielsweise der Fall sein, wenn die verwendeten Bildsensoren Kameras sind, welche ein Weitwinkelobjektiv verwenden. Es besteht aber beispielsweise auch die Möglichkeit, dass die Koordinatensysteme, auf die sich die von den Bildsensoren ausgegebenen Daten beziehen, dadurch entzerrt werden, dass sie an das Koordinatensystem, auf welches sich die von einem der Bildsensoren ausgegebenen Daten beziehen, angepasst werden. Beides hat den Vorteil, dass die Koordinatensysteme, auf die sich die von den Bildsensoren ausgegebenen Daten beziehen, einfacher miteinander in verglichen werden können.

Als bevorzugte Variante dazu besteht auch die Möglichkeit, dass, falls sich die von den Bildsensoren ausgegebenen Daten auf ein ein-, zwei- oder dreidimensionales Koordinatensystem beziehen, die Koordinatensysteme bereits im entsprechenden Bildsensor entzerrt werden, wodurch sich die von den Bildsensoren ausgegebenen Daten bereits auf entzerrte Koordinatensysteme beziehen. Dies hat ebenfalls den Vorteil, dass die Koordinatensysteme, auf die sich die von den Bildsensoren ausgegebenen Daten beziehen, einfacher miteinander in verglichen werden können.

Alternativ dazu besteht aber auch die Möglichkeit, dass, falls sich die von den Bildsensoren ausgegebenen Daten auf ein ein-, zwei- oder dreidimensionales Koordinatensystem beziehen, die Koordinatensysteme, auf welche sich die von den Bildsensoren ausgegebenen Daten beziehen, nicht entzerrt werden.

Falls sich die von den Bildsensoren ausgegebenen Daten auf ein zweidimensionales Koordinatensystem beziehen und der Überwachungsbereich durch ein zweidimensionales Koordinatensystem modelliert wird, so werden bevorzugt die von den Bildsensoren ausgegebenen Daten auf das zweidimensionale Koordinatensystem des Überwachungsbereichs übertragen.

Falls sich die von den Bildsensoren ausgegebenen Daten auf ein dreidimensionales Koordinatensystem beziehen und der Überwachungsbereich durch ein dreidimensionales Koordinatensystem modelliert wird, so werden bevorzugt die von den Bildsensoren ausgegebenen Daten auf das dreidimensionale Koordinatensystem des Überwachungsbereichs übertragen.

Falls sich die von den Bildsensoren ausgegebenen Daten auf ein eindimensionales Koordinatensystem beziehen und der Überwachungsbereich durch ein eindimensionales Koordinatensystem modelliert wird, so werden bevorzugt die von den Bildsensoren ausgegebenen Daten auf das eindimensionale Koordinatensystem des Überwachungsbereichs übertragen.

Diese Übertragung kann beispielsweise durch eine Umrechnung erfolgen, bei welcher eine Ausrichtung und eine Positionierung der verschiedenen Bildsensoren im Koordinatensystem des Überwachungsbereichs berücksichtigt werden. Entsprechend können die Koordinatensysteme, auf die sich die von den Bildsensoren ausgegebenen Daten beziehen, beispielsweise gedreht werden. Zudem können beispielsweise Längeneinheiten der Koordinatensysteme, auf die sich die von den Bildsensoren ausgegebenen Daten beziehen, auf das Koordinatensystem des Überwachungsbereichs umgerechnet werden.

Falls sich die von den Bildsensoren ausgegebenen Daten auf ein zwei- oder dreidimensionales Koordinatensystem beziehen und der Überwachungsbereich durch ein eindimensionales Koordinatensystem modelliert wird, so werden bevorzugt die von den Bildsensoren ausgegebenen Daten auf das eindimensionale Koordinatensystem des Überwachungsbereichs übertragen.

Falls sich die von den Bildsensoren ausgegebenen Daten auf ein dreidimensionales Koordinatensystem beziehen und der Überwachungsbereich durch ein ein- oder zweidimensionales Koordinatensystem modelliert wird, so werden bevorzugt die von den Bildsensoren ausgegebenen Daten auf das ein- bzw. zweidimensionale Koordinatensystem des Überwachungsbereichs übertragen.

In diesen beiden Fällen besteht die Möglichkeit, dass bei der Übertragung der Daten auf das Koordinatensystem des Überwachungsbereichs die Daten auf das Koordinatensystem des Überwachungsbereichs projiziert werden. Falls die Daten beispielsweise Parameter einer Modellierung der zu überwachenden Objekte enthalten, so kann beispielsweise das Modell auf das Koordinatensystem projiziert werden. Das bedeutet, dass, falls die von den Bildsensoren ausgegebenen Daten Parameter eines Ellipsoids enthalten, beispielsweise dieses Ellipsoid auf ein zweidimensionales Koordinatensystem des Überwachungsbereichs projiziert wird. Falls die von den Bildsensoren ausgegebenen Daten hingegen beispielsweise Parameter eines Ellipsoids oder einer Ellipse enthalten und der Überwachungsbereich durch ein eindimensionales Koordinatensystem modelliert wird, so kann beispielsweise bei der Übertragung der Daten eine Längenausdehnung des Ellipsoids bzw. der Ellipse auf dem eindimensionalen Koordinatensystem berücksichtigt werden. Falls sich die von den Bildsensoren ausgegebenen Daten auf ein Koordinatensystem mit weniger Dimensionen als das Koordinatensystem des Überwachungsbereichs beziehen, so werden bevorzugt die von den Bildsensoren ausgegebenen Daten auf das Koordinatensystem des Überwachungsbereichs übertragen, indem eine Ausrichtung der Koordinatensysteme der Bildsensoren räumlich im Koordinatensystem des Überwachungsbereichs angeordnet werden.

Falls sich die von den Bildsensoren ausgegebenen Daten auf ein Koordinatensystem des jeweiligen Bildsensors beziehen und falls der Überwachungsbereich durch ein zweidimensionales Koordinatensystem modelliert wird, so werden bevorzugt eine Position sowie eine Ausrichtung von jedem Bildsensor abgespeichert und für die Übertragung der von den Bildsensoren ausgegebenen Daten auf das zweidimensionale Koordinatensystem des Überwachungsbereichs berücksichtigt.

Falls sich die von den Bildsensoren ausgegebenen Daten auf ein Koordinatensystem des jeweiligen Bildsensors beziehen und falls der Überwachungsbereich durch ein ein- oder dreidimensionales Koordinatensystem modelliert wird, so werden bevorzugt eine Position sowie eine Ausrichtung von jedem Bildsensor abgespeichert und für die Übertragung der von den Bildsensoren ausgegebenen Daten auf das ein- bzw. dreidimensionale Koordinatensystem des Überwachungsbereichs berücksichtigt.

In beiden vorhergenannten Fällen hat dies den Vorteil, dass eine optimale Übertragung der Daten auf das Koordinatensystem des Überwachungsbereichs erreicht wird.

Als Variante dazu besteht aber auch die Möglichkeit, dass, falls sich die von den Bildsensoren ausgegebenen Daten auf ein Koordinatensystem des jeweiligen Bildsensors beziehen und falls der Überwachungsbereich durch ein Koordinatensystem modelliert wird, eine Position sowie eine Ausrichtung der Koordinatensysteme der Bildsensoren jeweils aufgrund von Merkmalen in den Bilddaten der Bildsensoren bestimmt wird, wobei diese Position sowie Ausrichtung für die Übertragung der von den Bildsensoren ausgegebenen Daten auf das Koordinatensystem des Überwachungsbereichs berücksichtigt werden.

Bevorzugt werden die Bildsensoren überkopf montiert. Das bedeutet, dass die Bildsensoren im Wesentlichen senkrecht nach unten ausgerichtet werden und entsprechend Bilder vom Geschehen unterhalb der Bildsensoren erfassen. Die Bildsensoren werden also zweckmässigerweise oberhalb der zu überwachenden Objekte angeordnet. Die Montage der Bildsensoren überkopf hat den Vorteil, dass die von den Bildsensoren überwachten Teilbereiche von oben her überwacht werden. Falls die Teilbereiche im Wesentlichen horizontale Flächen sind, welche zwar Wölbungen und Neigungen aufweisen können, werden dadurch die Teilbereiche aus einer im Wesentlichen senkrecht zu ihrer Fläche liegenden Position überwacht. Entsprechend bewegen sich die zu überwachenden Objekte auf einer Fläche, welche im Wesentlichen parallel zur Bildebene der Bildsensoren ist.

Dadurch wird eine optimale Erfassung von Positionen und Geschwindigkeiten der zu überwachenden Objekte ermöglicht. Zudem hat dies den Vorteil, dass sich die zu überwachenden Objekte nur in den wenigsten Fällen aus der Perspektive der Bildsensoren voreinander bewegen und gegenseitig verdecken können. Wenn die Bildsensoren überkopf montiert werden und die zu überwachenden Objekte Personen sind, so besteht beispielsweise vor allem in Randbereichen der überwachten Teilbereiche oder wenn sich eine erwachsene Person über ein Kind beugt eine Gefahr, dass sich Personen gegenseitig verdecken. Ansonsten können die Personen durch diese Anordnung der Bildsensoren optimal überwacht werden.

Als Variante dazu besteht auch die Möglichkeit, dass die Bildsensoren nicht überkopf montiert werden. Beispielsweise können sie schräg nach unten oder horizontal seitlich ausgerichtet werden. Je nach zu überwachenden Objekten und Geometrie des Überwachungsbereichs kann auch eine solche Anordnung der Bildsensoren vorteilhaft sein. Dies kann beispielsweise der Fall sein, wenn ein Rollband überwacht werden soll, auf welchem sich Personen oder Tiere befinden, welche sich nicht gegenseitig überholen können. Dies kann aber beispielsweise auch der Fall sein, wenn auf einem Förderband transportierte Gegenstände überwacht werden sollen.

Aus der nachfolgenden Detailbeschreibung und der Gesamtheit der Patentansprüche ergeben sich weitere vorteilhafte Ausführungsformen und Merkmalskombinationen der Erfindung.

## Kurze Beschreibung der Zeichnungen

Die zur Erläuterung des Ausführungsbeispiels verwendeten Zeichnungen zeigen:

Fig. 1      eine schematische Darstellung einer erfindungsgemässen Vorrichtung zur Überwachung eines Überwachungsbereichs,

Fig. 2a, b, c      je eine schematische Darstellung zur Illustration der Erfassung eines zu überwachenden Objekts durch einen Bildsensor,

Fig. 3      eine weitere schematische Darstellung der erfindungsgemässen Vorrichtung zur Überwachung des Überwachungsbereichs und

Fig. 4      eine weitere schematische Darstellung der erfindungsgemässen Vorrichtung zur Überwachung des Überwachungsbereichs.

Grundsätzlich sind in den Figuren gleiche Teile mit gleichen Bezugszeichen versehen.

## Wege zur Ausführung der Erfindung

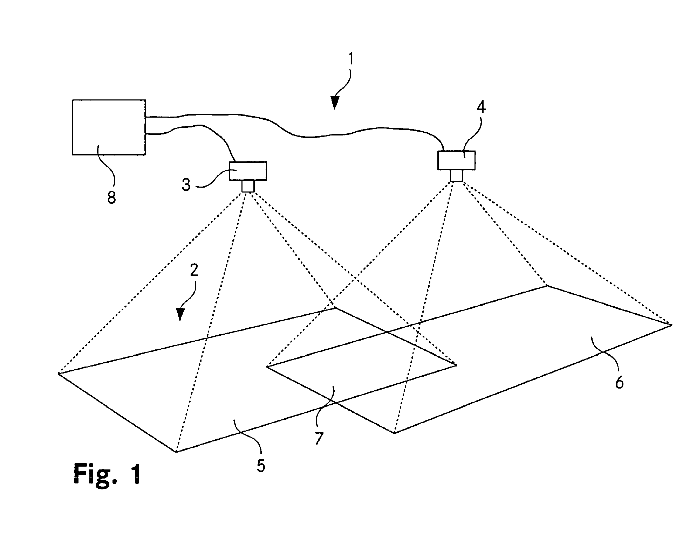

Figur 1 zeigt eine schematische Darstellung einer erfindungsgemässen Vorrichtung 1 zur Überwachung eines Überwachungsbereichs 2. Diese Vorrichtung 1 umfasst einen ersten Bildsensor 3 und einen zweiten Bildsensor 4. Beide Bildsensoren 3, 4 umfassen je eine Kamera, welche Filmsequenzen aufnehmen kann. Der erste Bildsensor 3 überwacht einen ersten Teilbereich 5 des Überwachungsbereichs 2, während der zweite Bildsensor 4 einen zweiten Teilbereich 6 des Überwachungsbereichs 2 überwacht. Die beiden Teilbereiche 5, 6 überlappen sich in einem Überlappungsbereich 7 und decken zusammen den gesamten Überwachungsbereich 2 ab.

Weiter umfasst die Vorrichtung 1 eine Berechnungseinheit 8. Diese Berechnungseinheit 8 kann beispielsweise ein Server oder sonst ein Computer sein. Die beiden Bildsensoren 3 und 4 sind mit der Berechnungseinheit 8 verbunden und geben Daten an die Berechnungseinheit 8 aus. In einer anderen Ausführungsform kann die Berechnungseinheit 8 aber auch in einen der Bildsensoren 3, 4 integriert sein. Dabei besteht auch die Möglichkeit, dass mehrere der Bildsensoren 3, 4 eine solche Berechnungseinheit 8 umfassen.

Die Bildsensoren 3, 4 können innerhalb des von ihnen überwachten Teilbereichs 5, 6 zu überwachende Objekte erfassen. Beispielsweise kann es sich bei den zu überwachenden Objekten um Personen handeln. Es kann sich aber auch um Tiere, Fahrzeuge oder Gegenstände handeln.

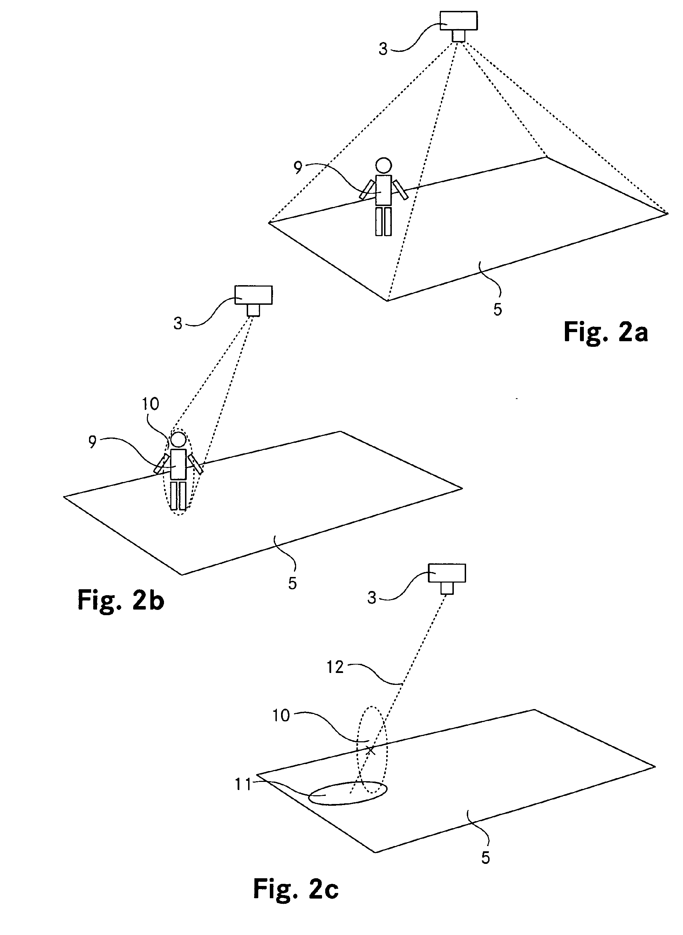

Die Figuren 2a, 2b und 2c zeigen je eine schematische Darstellung zur Illustration der Erfassung eines zu überwachenden Objekts durch einen Bildsensor. Im Folgenden wird für den gezeigten Bildsensor und den gezeigten Teilbereich jeweils auf den ersten Bildsensor 3 und den ersten Teilbereich 5 Bezug genommen. Es handelt sich dabei aber um eine exemplarische Beschreibung, welche auch für weitere Bildsensoren und weitere Teilbereiche steht. Insbesondere steht diese Beschreibung auch für den oben beschriebenen zweiten Bildsensor 4 und den oben beschriebenen zweiten Teilbereich 6.

In Figur 2a ist der erste Bildsensor 3 und der von ihm überwachte erste Teilbereich 5 gezeigt. Im ersten Teilbereich 5 befindet sich eine Person 9. Um diese Person 9 zu erfassen, umfasst der erste Bildsensor 3 eine Verarbeitungseinheit (nicht gezeigt), welche die vom ersten Bildsensor 3 aufgenommenen Bilddaten verarbeitet. Dazu identifiziert sie zu überwachende Objekte, welche dadurch vom Bildsensor 3 erfasst sind und gibt Daten zu den erfassten, zu überwachenden Objekten aus. Im vorliegenden Fall handelt es sich daher bei den ausgegebenen Daten um Daten zur Person 9, welche sich im ersten Teilbereich 5 befindet.

Für die Verarbeitung der vom ersten Bildsensor 3 erfassten Bilddaten werden die zu erfassenden Objekte als Ellipsoide im dreidimensionalen Raum modelliert. Wie in der Figur 2b gezeigt, wird daher die Person 9 durch ein Ellipsoid 10 modelliert. Bei dieser Modellierung ergibt eine vom Bildsensor 3 ausgehende Projektion dieses Ellipsoids 10 auf den ersten Teilbereich 5 eine Ellipse 11 (Figur 2c). Ein vom Bildsensor 3 ausgehender Strahl 12, welcher durch den Schwerpunkt oder Mittelpunkt des Ellipsoids 10 verläuft, verläuft auch durch den Schwerpunkt oder Mittelpunkt der Ellipse 11.

Um diese Modellierung der erfassten, zu überwachenden Objekte zu vereinfachen, werden die vom ersten Bildsensor 3 erfassten Bilddaten in der Verarbeitungseinheit in einem ersten Schritt entzerrt und die entzerrten Bilddaten werden mit einem zweidimensionalen Koordinatensystem versehen, welches sich über den überwachten ersten Teilbereich 5 erstreckt. In einem zweiten Schritt werden die zu überwachenden Objekte in den Bilddaten identifiziert, indem ein bekanntes Verfahren zur Objektidentifikation angewendet wird. Bei diesem Verfahren kann es sich beispielsweise um ein Verfahren handeln, bei welchem jeweils ein Standbild (ohne jegliches Objekt im überwachten ersten Teilbereich 5) von den Bilddaten subtrahiert wird. In einem dritten Schritt wird je eine Ellipse 11 auf die erfassten Objekte gelegt. Dazu werden jeweils Längen der beiden Hauptachsen der Ellipse 11, eine Position der Ellipse 11 sowie ein Winkel zwischen einer der beiden Hauptachsen der Ellipse 11 und einer Koordinatenachse des ersten Teilbereichs 5 an das entsprechende erfasste Objekt gefittet. Diese Daten zu den erfassten Objekten werden von der Verarbeitungseinheit und dem ersten Bildsensor 3 an die Berechnungseinheit 8 (siehe Figur 1) ausgegeben, wo sie weiterverarbeitet werden.

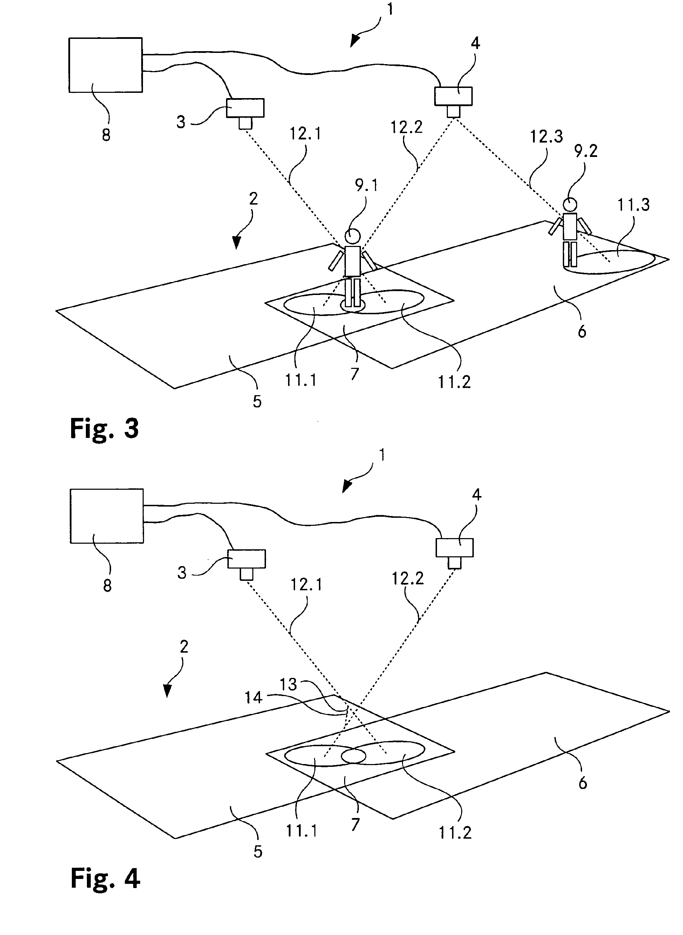

Figur 3 zeigt wie bereits Figur 1 eine schematische Darstellung der erfindungsgemässen Vorrichtung 1 zur Überwachung des Überwachungsbereichs 2. Im Gegensatz zur Figur 1 befinden sich hier aber zwei Personen 9.1, 9.2 im zweiten Teilbereich 6. Eine erste dieser beiden Personen 9.1 befindet sich gleichzeitig auch im ersten Teilbereich 5 und somit im Überlappungsbereich 7. Sie ist sowohl vom ersten als auch vom zweiten Bildsensor 3, 4 erfasst. Die zweite Person 9.2 hingegen befindet sich nur im zweiten Teilbereich 6 und ist nur vom zweiten Bildsensor 4 erfasst.

Für die erste Person 9.1, welche von beiden Bildsensoren 3, 4 erfasst ist, sind die Strahlen 12.1, 12.2 gezeigt, welche ausgehend vom jeweiligen Bildsensor 3, 4 durch den Schwerpunkt oder Mittelpunkt des modellierten Ellipsoids und der entsprechenden modellierten Ellipse 11.1, 11.2 verlaufen. Zudem sind die beiden Ellipsen 11.1, 11.2 gezeigt, welche von den beiden Bildsensoren 3, 4 für die erste Person 9.1 erfasst werden. Die Parameter der beiden Ellipsen 11.1, 11.2 werden von den Bildsensoren 3, 4 an die Berechnungseinheit 8 ausgegeben.

Weiter ist für die zweite Person 9.2, welche nur vom zweiten Bildsensor 4 erfasst ist, der Strahl 12.3 gezeigt, welcher ausgehend vom zweiten Bildsensor 4 durch den Schwerpunkt oder Mittelpunkt des modellierten Ellipsoids und der entsprechenden modellierten Ellipse 11.3 verläuft. Weiter ist die Ellipse 11.3 gezeigt, welche vom zweiten Bildsensor 4 für die zweite Person 9.2 erfasst wird. Die Parameter dieser Ellipse 11.3 werden vom zweiten Bildsensor 4 an die Berechnungseinheit 8 ausgegeben.

Aus diesen von den beiden Bildsensoren 3, 4 ausgegebenen Daten wird durch die Berechnungseinheit 8 eine Gesamtheit der zu überwachenden Objekte ermittelt. Dazu werden in einem ersten Schritt die Daten, welche von den beiden Bildsensoren 3, 4 ausgegeben werden, auf ein zweidimensionales Koordinatensystem umgerechnet, welches sich über den Überwachungsbereich 2 erstreckt. In einem zweiten Schritt wird aufgrund der umgerechneten Daten eine Matrix erstellt. Die Elemente dieser Matrix enthalten Bewertungen für die Wahrscheinlichkeit, dass ein vom ersten Bildsensor 3 erfasstes Objekt mit einem vom zweiten Bildsensor 4 übereinstimmt. Im vorliegenden Beispiel sind diese Bewertungen auf Wahrscheinlichkeiten, d.h. auf eins normiert. Die Bewertungen könnten aber auch auf einen anderen Wert normiert sein. In einem dritten Schritt wird auf der Basis der in der Matrix enthaltenen Bewertungen die wahrscheinlichste Zuordnung der erfassten Objekte bestimmt und die Gesamtheit der zu überwachenden Objekte ermittelt. Dabei wird die wahrscheinlichste Zuordnung von der Berechnungseinheit 8 unter Anwendung der Ungarischen Methode, welche auch als Kuhn-Munkres-Algorithmus bezeichnet wird, bestimmt.

Eine Grösse der von der Berechnungseinheit erstellten Matrix hängt von der Anzahl der von den beiden Bildsensoren 3, 4 erfassten Objekte ab. Da es sein kann, dass ein vom einen Bildsensor 3, 4 erfasstes Objekt nicht vom anderen Bildsensor 4, 3 erfasst ist, enthält die Matrix eine Anzahl Zeilen, welche der Anzahl der vom einen Bildsensor 3, 4 erfassten Objekte plus eins beträgt. Weiter enthält die Matrix aus diesem Grund eine Anzahl Spalten, welche der Anzahl der vom anderen Bildsensor 4, 3 erfassten Objekte plus eins beträgt.

Im vorliegenden Fall ist vom ersten Bildsensor 3 mit der ersten Person 9.1 nur ein zu überwachendes Objekt erfasst. Deshalb weist die von der Berechnungseinheit 8 bestimmte Matrix zwei Zeilen auf. Vom zweiten Bildsensor 4 hingegen sind mit der ersten und der zweiten Person 9.1, 9.2 zwei zu überwachende Objekte erfasst. Entsprechend weist die von der Berechnungseinheit 8 bestimmte Matrix drei Spalten auf. Somit hat die von der Berechnungseinheit 8 bestimmte Matrix folgende Form:

$$p_{11} \ p_{12} \ p_{13}$$

$$p_{21} \ p_{22} \ p_{23}$$

Die erste Zeile dieser Matrix bezieht sich auf Bewertungen, dass die vom ersten Bildsensor 3 erfasste erste Person 9.1 mit einer bzw. keiner vom zweiten Bildsensor 4 erfassten Person übereinstimmt. Die zweite Zeile der Matrix hingegen bezieht sich auf Bewertungen, dass sich keine vom ersten Bildsensor 3 erfasste Person mit einer bzw. keiner vom zweiten Bildsensor 4 erfassten Person übereinstimmt. Die erste Spalte der Matrix bezieht sich auf Bewertungen, dass die erste vom zweiten Bildsensor 4 erfasste Person 9.1 mit einer bzw. keiner vom ersten Bildsensor 3 erfassten Person übereinstimmt. Die zweite Spalte der Matrix bezieht sich auf Bewertungen, dass die zweite vom zweiten Bildsensor 4 erfasste Person 9.2 mit einer bzw. mit keiner vom ersten Bildsensor 3 erfassten Person übereinstimmt. Die dritte Spalte hingegen bezieht sich auf Bewertungen, dass keine vom zweiten Bildsensor 4 erfasste Person mit einer bzw. mit keiner vom ersten Bildsensor 3 erfassten Person übereinstimmt. Da somit das Element $p_{23}$ die Bewertung enthält, dass kein vom ersten Bildsensor 3 erfasstes Objekt mit keinem vom zweiten Bildsensor 4 erfassten Objekt übereinstimmt, kann dieses Element auf einen festen Wert gesetzt werden. Im Folgenden ist dieses Element auf null gesetzt. Es könnte aber auch auf einen beliebigen anderen Wert gesetzt werden.

In der Berechnungseinheit 8 sind sowohl die Positionen als auch die Ausrichtungen der beiden Bildsensoren 3, 4 abgespeichert. Deshalb kann die Berechnungseinheit 8 aufgrund der vom ersten Bildsensor 3 ausgegebenen Daten feststellen, ob sich ein vom ersten Bildsensor 3 erfasstes Objekt nur im ersten Teilbereich 5 befindet, oder ob es sich zugleich auch im zweiten Teilbereich 6 und somit im Überlappungsbereich 7 befindet. Genauso kann die Berechnungseinheit 8 deshalb aufgrund der vom zweiten Bildsensor 4 ausgegebenen Daten feststellen, ob sich ein vom zweiten Bildsensor 4 erfasstes Objekt nur im zweiten Teilbereich 6 befindet, oder ob es sich zugleich auch im ersten Teilbereich 5 und somit im Überlappungsbereich 7 befindet.

Im Beispiel, welches in Figur 3 gezeigt ist, befindet sich die erste Person 9.1 im Überlappungsbereich 7, während sich die zweite Person 9.2 nur im zweiten Teilbereich 6 befindet. Entsprechend setzt die Berechnungseinheit 8 die Bewertung $p_{12}$ auf null und die Bewertung $p_{22}$ auf 1:

$$p_{11} \ 0 \ p_{13}$$

$$p_{21} \ 1 \ 0$$

Die Elemente $p_{11}$, $p_{21}$, und $p_{13}$ der Matrix werden von der Berechnungseinheit 8 durch die Anwendung von Randbedingungen sowie gewissen Bewertungskriterien bestimmt. Die Randbedingungen bestehen daraus, dass jedes vom einen Bildsensor 3, 4 erfasste Objekt entweder mit einem vom anderen Bildsensor 4, 3 erfassten Objekt übereinstimmt oder nicht übereinstimmt. Dadurch ergeben sich für die vorliegende Matrix folgende Randbedingungen: $p_{11} + p_{21} = 1$, $p_{12} + p_{22} = 1$ und $p_{11} + p_{12} + p_{13} = 1$. Im in der Figur 3 gezeigten Beispiel mit der ersten und der zweiten Person 9.1, 9.2 im Überwachungsbereich 2 bedeutet dies, dass die Matrix die Form

$$p_{11} \quad 0 \, (1 - p_{11})$$

$$(1 - p_{11}) \, 1 \quad 0$$

erhält, wobei der Wert des Elements $p_{11}$ von der Berechnungseinheit 8 gemäss den weiter unten erläuterten Bewertungskriterien bestimmt wird.

In einem modifizierten Fall, welcher ähnlich wie der in der Figur 3 dargestellte Fall aufgebaut ist, wobei sich aber die nur vom zweiten Bildsensor 4 erfasste zweite Person 9.2 ebenfalls im Überlappungsbereich 7 befindet, sieht die von der Berechnungseinheit 8 aufgestellte Matrix anders aus. In diesem Fall wird berücksichtigt, dass eine der beiden vom zweiten Bildsensor 4 erfassten Personen 9.1, 9.2 mit der vom ersten Bildsensor 3 erfassten Person 9.1 übereinstimmen könnte. Entsprechend sieht die von der Berechnungseinheit 8 erstellte Matrix folgendermassen aus:

$$p_{11} \quad p_{12} \quad (1 - p_{11} - p_{12})$$

$$(1 - p_{11}) \, (1 - p_{12}) \quad 0$$

Die Werte der Elemente $p_{11}$ und $p_{12}$ werden von der Berechnungseinheit 8 gemäss den im Folgenden erläuterten Bewertungskriterien bestimmt.

Figur 4 zeigt wie bereits die Figuren 1 und 3 eine schematische Darstellung der erfindungsgemässen Vorrichtung 1 zur Überwachung des Überwachungsbereichs 2. Im Gegensatz zur Figur 3 sind keine Personen dargestellt. Es sind jedoch die beiden Ellipsen 11.1, 11.2 im Überlappungsbereich 7 zusammen mit den von den Bildsensoren 3, 4 ausgehenden Strahlen 12.1, 12.2 dargestellt, deren Daten gemäss Figur 3 für die erfasste erste Person 9.1 (hier nicht gezeigt) von den Bildsensoren 3, 4 an die Berechnungseinheit 8 ausgegeben werden. Die Figur 4 dient dazu, die Bestimmung der Elemente der Matrix zu illustrieren.

Wie bereits erwähnt enthalten die Elemente der Matrix die Bewertungen für die Wahrscheinlichkeit, dass ein vom ersten Bildsensor 3 erfasstes Objekt mit einem vom zweiten Bildsensor 4 erfassten Objekt übereinstimmt. Dazu können verschiedene Bewertungskriterien verwendet werden.

Beispielsweise kann eine Minimaldistanz 13 zwischen den von den Bildsensoren 3, 4 ausgehenden Strahlen 12.1, 12.2 als Bewertungskriterium verwendet werden. Dabei kann eine Minimaldistanz von null (sich schneidende Strahlen 12.1, 12.2) einer grösstmöglichen Bewertung entsprechen. Falls die Bewertungen in Wahrscheinlichkeiten ausgedrückt werden, so entspricht dies einem Wert von $p_1 = 1$ und alle anderen Minimaldistanzen sind durch eine kleinere Wahrscheinlichkeit bewertet. Falls hingegen die Bewertungen mittels Kostenbewertungen ausgedrückt werden, so entspricht dies dem Wert von $p_1 = 0$, während alle anderen Minimaldistanzen durch einen grösseren Bewertungswert bewertet werden.

Als zweites mögliches Bewertungskriterium kann eine Ähnlichkeit der Ellipsengrössen verwendet werden. Dabei sollte aber berücksichtigt werden, dass die Ellipsen Projektionen eines Ellipsoids sind. Entsprechend kann für die Bestimmung der Ellipsengrössen eine Distanz in der Ebene des Überwachungsbereichs 2 zum jeweiligen Bildsensor 3, 4 berücksichtigt werden. Dabei kann eine Übereinstimmung der Ellipsengrössen unter Distanzberücksichtigung zum jeweiligen Bildsensor einer grösstmöglichen Bewertung entsprechen. Falls die Bewertungen in Wahrscheinlichkeiten ausgedrückt werden, so entspricht dies einem Wert von $p_2 = 1$ und alle anderen Ellipsengrössenähnlichkeiten sind durch eine kleinere Wahrscheinlichkeit bewertet. Falls hingegen die Bewertungen mittels Kostenbewertungen ausgedrückt werden, so entspricht dies dem Wert von $p_2 = 0$, während alle anderen Ellipsengrössenähnlichkeiten durch einen grösseren Bewertungswert bewertet werden.

Als drittes mögliches Bewertungskriterium kann ein Ähnlichkeitsmass für die Geschwindigkeiten der erfassten Objekte verwendet werden. Dabei kann es sich beispielsweise um den Absolutbetrag der Differenz zwischen den beiden Geschwindigkeitsvektoren handeln. Falls dieser Absolutbetrag null ist, so handelt es sich um die grösstmögliche Übereinstimmung. Falls die Bewertungen in Wahrscheinlichkeiten ausgedrückt werden, so entspricht dies einem Wert von $p_3 = 1$ und alle anderen Geschwindigkeitsdifferenzen sind durch eine kleinere Wahrscheinlichkeit bewertet. Falls hingegen die Bewertungen mittels Kostenbewertungen ausgedrückt werden, so entspricht dies dem Wert von $p_3 = 0$, während alle anderen Geschwindigkeitsdifferenzen durch einen grösseren Bewertungswert bewertet werden.

Als viertes mögliches Bewertungskriterium kann ein Mass verwendet werden, welches eine sinnvolle Höhe des Mittelpunktes 14 der Linie der Minimaldistanz 13 zwischen den von den Bildsensoren 3, 4 ausgehenden Strahlen 12.1, 12.2 bewertet. Dabei kann die sinnvolle Höhe den zu überwachenden Objekten angepasst werden. Bei erwachsenen Personen kann die sinnvolle Höhe je nach Annahme der Personengrösse 80 - 100cm betragen. Beispielsweise kann das Mass durch den Absolutbetrag der Differenz zwischen der sinnvollen Höhe und der Höhe des Mittelpunktes 14 genommen werden.

In diesem Fall bedeutet ein Wert null des Absolutbetrags eine grösstmögliche Übereinstimmung. Falls die Bewertungen in Wahrscheinlichkeiten ausgedrückt werden, so entspricht dies einem Wert von $p_4 = 1$ und alle anderen Höhen des Mittelpunktes 14 sind durch eine kleinere Wahrscheinlichkeit bewertet. Falls hingegen die Bewertungen mittels Kostenbewertungen ausgedrückt werden, so entspricht dies dem Wert von $p_4 = 0$, während alle anderen Höhen des Mittelpunkts 14 durch einen grösseren Bewertungswert bewertet werden.

Als fünftes mögliches Bewertungskriterium kann ein Mass verwendet werden, welches die bisherigen Zuordnungen berücksichtigt. Falls es sich bei den Bildsensoren 3, 4 um Kameras handelt, welche Filmsequenzen aufnehmen, kann dazu beispielsweise eine Summe über die Bewertungen der Übereinstimmung der entsprechenden zu überwachenden Objekte während der letzten zehn aufgenommenen Einzelbilder verwendet werden. In diesem Beispiel bedeutet eine grösstmögliche Bewertung kontinuierlich während der letzen zehn Bewertungen eine grösstmögliche Bewertung. Falls die Bewertungen in Wahrscheinlichkeiten ausgedrückt werden, so entspricht dies einem Wert von $p_5 = 1$ und alle anderen bisherigen Zuordnungen sind durch eine kleinere Wahrscheinlichkeit bewertet. Falls hingegen die Bewertungen mittels Kostenbewertungen ausgedrückt werden, so entspricht dies dem Wert von $p_5 = 0$, während alle anderen bisherigen Zuordnungen durch einen grösseren Bewertungswert bewertet werden.

Für die Bestimmung der Elemente der Matrix kann jeweils eines dieser fünf oben genannten Bewertungskriterien verwendet werden. Es besteht aber auch die Möglichkeit, dass ein anderes hier nicht genanntes Bewertungskriterium verwendet wird. Zudem besteht die Möglichkeit, dass mehrer Bewertungskriterien gemeinsam verwendet werden. Beispielsweise können die Matrixelemente jeweils aus einer Summe der verschiedenen Bewertungswerte gebildet sein. Dabei können die verschiedenen Bewertungswerte der verschiedenen Bewertungskriterien beispielsweise auch unterschiedlich gewichtet sein. Bezogen auf die oben genannten Bewertungskriterien kann ein Matrixelement $p_{ij}$ beispielsweise wie folgt gebildet sein:

$$p_{ij} = a_1 p_1 + a_2 p_2 + a_3 p_3 + a_4 p_4 + a_5 p_5,$$

wobei $a_k$ jeweils einen Gewichtungsfaktor darstellt. Falls es sich bei den einzelnen Bewertungen um auf 1 normierte Wahrscheinlichkeiten handelt, so sollten die Gewichtungsfaktoren ebenfalls auf 1 normiert sein: $a_1 + a_2 + a_3 + a_4 + a_5 = 1$.

Wie bereits erwähnt erfolgt die Zuordnung der zu überwachenden Objekte auf der Basis der Matrix durch die Berechnungseinheit 8 in an sich bekannter Weise, unter Anwendung der Ungarischen Methode, welche auch als Kuhn-Munkres-Algorithmus bezeichnet wird. Aus dieser Zuordnung wird durch die Berechnungseinheit 8 die Gesamtheit der zu überwachenden Objekte ermittelt. Die Gesamtheit der zu überwachenden Objekte kann von der Berechnungseinheit 8 wiederum ausgegeben werden. Dazu können beispielsweise die überwachten Objekte als Punkte im Überwachungsbereich 2 auf einem Bildschirm (nicht gezeigt) dargestellt werden. Es besteht aber auch die Möglichkeit, dass die Gesamtheit der zu überwachenden Objekte nur in Form von Zahlen ausgegeben wird. Beispielsweise kann die Berechnungseinheit 8 an einen weiteren Computer angeschlossen sein, welcher den zeitlichen Verlauf der Anzahl der zu überwachenden Objekte auswertet. Dieser weitere Computer kann aber beispielsweise auch die Bewegungen der Objekte aufzeichnen und Stauwarnungen ausgeben, falls sich in einem Bereich des Überwachungsbereichs 2 Objekte stauen. Diese Verwendungsmöglichkeiten der von der Berechnungseinheit 8 ausgegebenen Gesamtheit der zu überwachenden Objekte sind nicht abschliessend. Die Daten der ausgegebenen Gesamtheit können je nach Bedarf verwendet werden. Auch kann die oben beschriebene Vorrichtung 1 entsprechend den konkreten Bedürfnissen angepasst werden.

Die oben beschriebene Vorrichtung 1 ist nicht die einzige erfindungsgemässe Ausführungsform. Es sind diverse Abwandlungen von der Vorrichtung 1 möglich. Beispielsweise besteht die Möglichkeit, dass die zu erfassenden Objekte von den Bildsensoren nicht als Ellipsoide, sondern andersartig modelliert werden. Weiter besteht die Möglichkeit, dass die von den Bildsensoren ausgegebenen Daten nur die Positionen der erfassten Objekte oder nur Parameter zu Strahlen ausgehend vom jeweiligen Bildsensor zum jeweiligen erfassten Objekt enthalten. Dabei besteht die Möglichkeit, dass die Datenerfassung der Bildsensoren im Wesentlichen wie oben im Zusammenhang mit Figur 2c beschrieben in drei Schritten erfolgt. Von den derart erfassten Daten kann beispielsweise für ein erfasstes Objekt jeweils nur die Position des Ellipsenmittelpunkts von der Verarbeitungseinheit und dem entsprechenden Bildsensor an die Berechnungseinheit ausgegeben werden. Es besteht aber auch die Möglichkeit, dass von den Bildsensoren jeweils nur Daten zu einem Strahl ausgehend vom entsprechenden Bildsensor durch den Ellipsenmittelpunkt ausgegeben werden. Als Variante besteht aber auch die Möglichkeit, dass eine andere Form an das erfasste Objekt gefittet wird. Beispielsweise kann es sich dabei um einen Kreis oder um ein Rechteck handeln.

Um eine optimale Bestimmung der Positionen der zu überwachenden Objekte zu ermöglichen, kann beispielsweise eine Höhe für den Schwerpunkt der zu überwachenden Objekte angenommen werden. Dabei kann ein Schnittpunkt zwischen einem vom jeweiligen Bildsensor ausgehenden, zum erfassten Objekt zeigenden Strahl und einer in der angenommenen Höhe des Schwerpunkts über dem Boden angeordneten Ebene berechnet werden. Der so bestimmte Schnittpunkt kann als Position des entsprechenden Objekts verwendet werden. Eine derartige Positionsbestimmung ist auch dann möglich, wenn ein zu überwachendes Objekt nur von einem Bildsensor erfasst ist.

Bei diesem Vorgehen zur Positionsbestimmung besteht die Möglichkeit, dass als Wert für die Höhe des Schwerpunkts ein fester Wert angenommen wird. Es besteht aber auch die Möglichkeit, dass in der Gesamtheit der zu überwachenden Objekte für jedes Objekt ein individueller Wert für die Höhe des Schwerpunkts gespeichert wird. Falls ein Objekt neu in die Gesamtheit der zu überwachenden Objekte aufgenommen wird, kann dabei ein vorgegebener Wert eingesetzt werden, welcher in etwa der Höhe des Schwerpunkts der zu überwachenden Objekte entspricht. Falls sich dieses Objekt in einen Überlappungsbereich bewegt, in welchem es von mehr als einem Bildsensor erfasst wird, kann der gespeicherte Wert der Höhe des Schwerpunkts angepasst werden, indem die Höhe des Mittelpunktes der Linie der Minimaldistanz zwischen den von den Bildsensoren ausgehenden Strahlen mitberücksichtigt wird. Dabei kann beispielsweise jeweils der Wert der Höhe des Mittelpunkts der Linie der Minimaldistanz direkt als Höhe des Schwerpunkts abgespeichert werden. Es besteht aber auch die Möglichkeit, dass bei mehrmaliger Bewegung eines Objekts in einen Überlappungsbereich ein Mittelwert der bisher bestimmten Werte der Höhe des Schwerpunkts abgespeichert wird. Letzteres ermöglicht die Berücksichtigung von mehreren Bestimmungen der Höhe des Schwerpunkts, wodurch eine genauere Bestimmung der Höhe des Schwerpunkts ermöglicht wird. Dies führt zu einer genaueren Positionsbestimmung der zu überwachenden Objekte, da die von einem Bildsensor ausgehenden, zum erfassten Objekt verlaufenden Strahlen stark geneigt verlaufen können, wenn sich ein Objekt im Randbereich eines Teilbereichs befindet. Entsprechend können bereits kleine Abweichungen der Höhe des Schwerpunkts zu erheblichen Positionsabweichungen führen.

Zusammenfassend ist festzustellen, dass ein dem eingangs genannten technischen Gebiet zugehörendes Verfahren und eine entsprechende Vorrichtung geschaffen wird, welche aus den Daten der Bildsensoren eine verbesserte Ermittlung der Gesamtheit der zu überwachenden Objekte im Überwachungsbereich ermöglichen.

**Patentansprüche**

1. Verfahren zur Überwachung eines Überwachungsbereichs (2) mit wenigstens zwei Bildsensoren (3, 4), wobei

a) durch jeden der Bildsensoren (3, 4) ein Teilbereich (5, 6) des Überwachungsbereichs (2) überwacht wird, indem durch jeden Bildsensor (3, 4) innerhalb des von ihm überwachten Teilbereichs lokalisierte, zu überwachende Objekte (9.1, 9.2) erfasst werden und von jedem Bildsensor (3, 4) Daten zu den erfassten Objekten (9.1, 9.2) ausgegeben werden,
b) die Bildsensoren (3, 4) derart angeordnet und ausgerichtet werden, dass sich die überwachten Teilbereiche (5, 6) überlappen und dass jedes zu überwachende Objekt (9.1, 9.2), welches sich im Überwachungsbereich (2) befindet, immer von mindestens einem Bildsensor (3, 4) erfasst ist und
c) aus den Daten der Bildsensoren (3, 4) eine Gesamtheit der zu überwachenden Objekte im Überwachungsbereich (2) ermittelt wird,
**dadurch gekennzeichnet, dass**
d) aufgrund der Daten der Bildsensoren (3, 4) die zu überwachenden Objekte (9.1, 9.2) in überlappenden Teilbereichen (5, 6), welche von mehr als einem Bildsensor (3, 4) erfasst sind, mittels einer Bewertung ihrer Übereinstimmung einander zugeordnet werden um die Gesamtheit der zu überwachenden Objekte im Überwachungsbereich (2) zu ermitteln.

2. Verfahren nach Anspruch 1, **dadurch gekennzeichnet, dass** jeweils für die Zuordnung der zu überwachenden Objekte (9.1, 9.2) in überlappenden Teilbereichen (3, 4) eine Matrix erstellt wird, deren Elemente p_ij die Bewertung enthalten, wie gut ein von einem Bildsensor (3, 4) erfasstes Objekt (9.1, 9.2) mit Identifikation i mit einem von einem anderen Bildsensor (3, 4) erfasstes Objekt (9.1, 9.2) mit Identifikation j übereinstimmt.

3. Verfahren nach Anspruch 1 oder 2, **dadurch gekennzeichnet, dass** für jede Kombination von möglicherweise übereinstimmenden Objekten (9.1, 9.2) eine Summe der Bewertungen der bei dieser Kombination übereinstimmenden Objekte (9.1, 9.2) gebildet wird und dass die Zuordnung der zu überwachenden Objekte (9.1, 9.2) durch eine Wahl der Kombination erfolgt, welche ein Extrem dieser Summe ergibt.

4. Verfahren nach einem der Ansprüche 1 bis 3, **dadurch gekennzeichnet, dass** die von den Bildsensoren (3, 4) ausgegebenen Daten anonymisiert ausgegeben werden.

5. Verfahren nach einem der Ansprüche 1 bis 4, **dadurch gekennzeichnet, dass** in den von den Bildsensoren (3, 4) ausgegebenen Daten jedes erfasste Objekt (9.1, 9.2) durch ein parametrisiertes Modell repräsentiert wird.

6. Verfahren nach Anspruch 5, **dadurch gekennzeichnet, dass** für die Bewertung der Übereinstimmung jeweils ein aus einer minimalen Distanz (13) zwischen einem Strahl (12.1, 12.2, 12.3) ausgehend von einem Bildsensor (3, 4) durch einen Schwerpunkt des parametrisierten Modells und einem Strahl (12.1, 12.2, 12.3) ausgehend von einem anderen Bildsensor (4, 3) durch einen Schwerpunkt des parametrisierten Modells berechneter Wert berücksichtigt wird.

7. Verfahren nach Anspruch 6, **dadurch gekennzeichnet, dass** für jedes zu überwachende Objekt der Gesamtheit der zu überwachenden Objekte eine Höhe des Schwerpunkts des entsprechenden Objekts gespeichert wird, wobei anfangs eine sinnvolle Höhe als Wert dieser Höhe angenommen wird und der Wert dieser Höhe dynamisch angepasst wird, indem bei jeder Zuordnung von zu überwachenden Objekten, bei welcher das entsprechende zu überwachende Objekt von wenigstens zwei Bildsensoren erfasst ist, eine Höhe des Schwerpunkts dieses Objekts bestimmt wird, indem eine Höhe eines Mittelpunkts einer kürzesten Verbindungslinie zwischen einem Strahl ausgehend vom einen Bildsensor durch den Schwerpunkt des von ihm erfassten parametrisierten Modells und einem Strahl ausgehend vom anderen Bildsensor durch den Schwerpunkt des von ihm erfassten parametrisierten Modells ermittelt wird.

8. Verfahren nach einem der Ansprüche 5 bis 7, **dadurch gekennzeichnet, dass** für die Bewertung der Übereinstimmung berücksichtigt wird, ob sich ein Mittelpunkt (14) einer kürzesten Verbindungslinie zwischen dem Strahl (12.1, 12.2, 12.3) ausgehend vom einen Bildsensor (3, 4) durch den Schwerpunkt des von ihm erfassten parametrisierten Modells und dem Strahl (12.1, 12.2, 12.3) ausgehend vom anderen Bildsensor (3, 4) durch den Schwerpunkt des von ihm erfassten parametrisierten Modells auf einer sinnvollen Höhe für eine Höhe eines Schwerpunkts der zu überwachenden Objekte (9.1, 9.2) befindet.

9. Verfahren nach einem der Ansprüche 5 bis 8, **dadurch gekennzeichnet, dass** eine Ähnlichkeit der parametrisierten Modelle der zu überwachenden Objekte für die Bewertung der Übereinstimmung berücksichtigt wird.

10. Verfahren nach einem der Ansprüche 1 bis 9, **dadurch gekennzeichnet, dass** für die Bewertung der Übereinstimmung von den Bildsensoren (3, 4) erfasste Geschwindigkeiten und Bewegungsrichtungen der zu überwachenden Objekte (9.1, 9.2) berücksichtigt werden.

11. Verfahren nach einem der Ansprüche 1 bis 10, **dadurch gekennzeichnet, dass** für die Bewertung der Übereinstimmung früher erfolgte Zuordnungen der zu überwachenden Objekte (9.1, 9.2) berücksichtigt werden.

12. Verfahren nach einem der Ansprüche 1 bis 11, **dadurch gekennzeichnet, dass** der Überwachungsbereich (2) als zweidimensionale Fläche mit einem zweidimensionalen Koordinatensystem modelliert wird und dass jedes der zu überwachenden Objekte (9.1, 9.2) der Gesamtheit der zu überwachenden Objekte durch sich auf dieses Koordinatensystem beziehende Daten charakterisiert wird.

13. Verfahren nach einem der Ansprüche 1 bis 12, **dadurch gekennzeichnet, dass** jeder von einem Bildsensor (3, 4) überwachte Teilbereich (5, 6) als zweidimensionale Fläche mit einem zweidimensionalen Koordinatensystem modelliert wird und dass sich die von jedem Bildsensor (3, 4) ausgegebenen Daten zu den erfassten Objekten (9.1, 9.2) auf das Koordinatensystem des von diesem Bildsensor (3, 4) überwachten Teilbereichs (5, 6) beziehen.

14. Verfahren nach Anspruch 7, **dadurch gekennzeichnet, dass** die von den Bildsensoren (3, 4) erfassten Objekte (9.1, 9.2) als Ellipsoide (10) modelliert werden, deren Projektion auf die zweidimensionale Fläche des entsprechenden Teilbereichs (5, 6) eine Ellipse (11.1, 11.2, 11.3) ergeben und dass die von den Bildsensoren (3, 4) ausgegebenen Daten zu jedem der erfassten, zu überwachenden Objekte (9.1, 9.2) eine Identifikation, X- und Y-Koordinaten eines Mittelpunkts der Ellipse (11.1, 11.2, 11.3), Grössen der Hauptachsen der Ellipse (11.1, 11.2, 11.3), einen Orientierungswinkel der Ellipse (11.1, 11.2, 11.3) sowie einen Geschwindigkeitsvektor umfassen.

15. Verfahren nach Anspruch 13 oder 14, **dadurch gekennzeichnet, dass** die Koordinatensysteme, auf welche sich die von den Bildsensoren (3, 4) ausgegebenen Daten beziehen, entzerrt werden.

16. Verfahren nach Anspruch 12 und einem der Ansprüche 14 bis 15, **dadurch gekennzeichnet, dass** die von den Bildsensoren (3, 4) ausgegebenen Daten auf das zweidimensionale Koordinatensystem des Überwachungsbereichs (2) übertragen werden.

17. Verfahren nach Anspruch 16, **dadurch gekennzeichnet, dass** eine Position sowie eine Ausrichtung von jedem Bildsensor (3, 4) abgespeichert werden und für die Übertragung der von den Bildsensoren (3, 4) ausgegebenen Daten auf das zweidimensionale Koordinatensystem des Überwachungsbereichs (2) berücksichtigt werden.

18. Verfahren nach einem der Ansprüche 1 bis 17, **dadurch gekennzeichnet, dass** die Bildsensoren (3, 4) überkopf montiert werden.

**19.** Vorrichtung (1) zur Überwachung eines Überwachungsbereichs (2) mit wenigstens zwei Bildsensoren (3, 4), wobei

a) durch jeden der Bildsensoren (3, 4) ein Teilbereich (5, 6) des Überwachungsbereichs (2) überwachbar ist, indem durch jeden Bildsensor (3, 4) innerhalb des von ihm überwachbaren Teilbereichs (5, 6) lokalisierte, zu überwachende Objekte (9.1, 9.2) erfassbar sind und von jedem Bildsensor (3, 4) Daten zu den erfassten Objekten (9.1, 9.2) ausgebbar sind,
b) die Bildsensoren (3, 4) derart angeordnet und ausgerichtet sind, dass sich die überwachten Teilbereiche (5, 6) überlappen und dass jedes zu überwachende Objekt (9.1, 9.2), welches sich im Überwachungsbereich (2) befindet, immer von mindestens einem Bildsensor (3, 4) erfassbar ist und
c) die Vorrichtung (1) eine Berechnungseinheit (8) umfasst, durch welche aus den Daten der Bildsensoren (3, 4) eine Gesamtheit der zu überwachenden Objekte im Überwachungsbereich (2) ermittelbar ist,
**dadurch gekennzeichnet, dass**
d) durch die Berechnungseinheit (8) aufgrund der Daten der Bildsensoren (3, 4) die zu überwachenden Objekte (9.1, 9.2) in überlappenden Teilbereichen (5, ,6), welche von mehr als einem Bildsensor (3, 4) erfasst sind, mittels Bewertung ihrer Übereinstimmung einander zuordenbar sind um die Gesamtheit der zu überwachenden Objekte im Überwachungsbereich (2) zu ermitteln.

Fig. 1

**Fig. 2a**

**Fig. 2b**

**Fig. 2c**

**Fig. 3**

**Fig. 4**

| | Europäisches Patentamt European Patent Office Office européen des brevets | **EUROPÄISCHER RECHERCHENBERICHT** | **Nummer der Anmeldung** EP 11 40 5363 |
|---|---|---|---|

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2007/183669 A1 (OWECHKO YURI [US] ET AL) 9. August 2007 (2007-08-09) * das ganze Dokument * ----- | 1-19 | INV. H04N7/18 G06K9/00 G08B13/196 G06K9/62 |
| A | US 2006/222205 A1 (PORIKLI FATIH M [US] ET AL) 5. Oktober 2006 (2006-10-05) * Absatz [0039] * * Absatz [0052] * * Absatz [0086] - Absatz [0091] * ----- | 1-19 | ADD. G06K9/32 |
| A | US 2008/225121 A1 (YOSHIDA ATSUSHI [JP] ET AL) 18. September 2008 (2008-09-18) * Absatz [0093] - Absatz [0113] * ----- | 1-19 | |
| A | WO 2004/045215 A1 (INTELLIVID CORP [US]) 27. Mai 2004 (2004-05-27) * Absatz [0072] - Absatz [0082] * ----- | 1-19 | |
| A | WO 2009/070560 A1 (NEC LAB AMERICA INC) 4. Juni 2009 (2009-06-04) * Seite 11, Zeile 2 - Zeile 30 * ----- | 1-19 | RECHERCHIERTE SACHGEBIETE (IPC) |
| A | TING-HSUN CHANG ET AL: "Tracking multiple people with a multi-camera system", MULTI-OBJECT TRACKING, 2001. PROCEEDINGS. 2001 IEEE WORKSHOP ON JULY 8, 2001, PISCATAWAY, NJ, USA,IEEE, 1. Januar 2001 (2001-01-01), Seiten 19-26, XP010554350, ISBN: 978-0-7695-1171-9 * Absatz [0004] * ----- | 1-19 | H04N G06K G08B |

Der vorliegende Recherchenbericht wurde für alle Patentansprüche erstellt

| Recherchenort | Abschlußdatum der Recherche | Prüfer |
|---|---|---|
| Berlin | 22. November 2012 | Blais, Denis |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
......................................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 11 40 5363

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

22-11-2012

| Im Recherchenbericht angeführtes Patentdokument | Datum der Veröffentlichung | Mitglied(er) der Patentfamilie | Datum der Veröffentlichung |
|---|---|---|---|
| US 2007183669 A1 | 09-08-2007 | KEINE | |
| US 2006222205 A1 | 05-10-2006 | CN 101120382 A<br>EP 1836683 A2<br>JP 4782123 B2<br>JP 2008535038 A<br>US 2006222205 A1<br>WO 2006107055 A2 | 06-02-2008<br>26-09-2007<br>28-09-2011<br>28-08-2008<br>05-10-2006<br>12-10-2006 |
| US 2008225121 A1 | 18-09-2008 | JP 3886524 B2<br>US 2008225121 A1<br>WO 2006067947 A1 | 28-02-2007<br>18-09-2008<br>29-06-2006 |
| WO 2004045215 A1 | 27-05-2004 | AT 454789 T<br>AU 2003285191 A1<br>CA 2505831 A1<br>EP 1563686 A1<br>US 2004130620 A1<br>US 2005265582 A1<br>WO 2004045215 A1 | 15-01-2010<br>03-06-2004<br>27-05-2004<br>17-08-2005<br>08-07-2004<br>01-12-2005<br>27-05-2004 |
| WO 2009070560 A1 | 04-06-2009 | EP 2225727 A1<br>US 2009296985 A1<br>WO 2009070560 A1 | 08-09-2010<br>03-12-2009<br>04-06-2009 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2005027533 A
- EP 1676239 B1
- US 7149325 B2

- US 2008118106 A1
- US 7529388 B2